# EUROPEAN PATENT APPLICATION

(11) **EP 3 263 255 A1**
(43) Date of publication of application: **03.01.2018**
(21) Application number: 16755564.8
(22) Date of filing: 24.02.2016
(51) Int. Cl.: B23C 5/10, B23C 5/16

(54) **RADIUS END MILL, BALL END MILL, AND END MILL**

(30) Priority: 27.02.2015 JP 2015038218; 27.02.2015 JP 2015038219
(71) Applicant: Mitsubishi Materials Corporation, Chiyoda-ku Tokyo 100-8117 (JP)
(72) Inventor: WATANABE Hiroshi, Akashi-shi Hyogo 674-0071 (JP); SAKAGUCHI Koutarou, Akashi-shi Hyogo 674-0071 (JP)
(74) Representative: Hoffmann Eitle
(86) International application number: PCT/JP2016/055471
(87) International publication number: WO 2016/136820

(57) **Abstract**

The present invention includes an end mill body (2) which is formed of ceramic, a chip discharge flute (4) which is formed on an outer periphery of the end mill body (2), a peripheral cutting edge (6) which is formed on an intersection ridge line between a wall surface facing a tool rotation direction (T) in the chip discharge flute (4) and an outer peripheral surface of the end mill body (2), an end cutting edge which is formed on an intersection ridge line between the wall surface in the chip discharge flute (4) and a tip surface of the end mill body (2), and a corner cutting edge which is positioned at a tip outer-peripheral part of the end mill body (2), connects an outer end of the end cutting edge and a tip of the peripheral cutting edge (6) to each other, and has a convexly curved shape which is convex toward a tip outer-peripheral side of the end mill body (2). A radial rake angle (angle α) of at least the peripheral cutting edge (6) among the peripheral cutting edge (6), the end cutting edge, and the corner cutting edge is set to a negative angle, and the radial rake angle (angle α) of the peripheral cutting edge (6) is -20° to -10°.

## Description

### Technical Field

The present invention relates to a radius end mill, a ball end mill, and an end mill which are formed of ceramic.

Priority is claimed on Japanese Patent Application No. 2015-038218, filed on February 27, 2015 and Japanese Patent Application No. 2015-038219, filed on February 27, 2015, the contents of which are incorporated herein by reference.

### Background Art

For example, in the related art, as disclosed in PTL 1, a radius end mill formed of ceramic is known.

The radius end mill includes a shaft-shaped end mill body, and a chip discharge flute, a peripheral cutting edge, an end cutting edge (tip cutting edge), and a corner cutting edge are formed on the end mill body.

During cutting operation, the radius end mill is fed in a direction intersecting an axial line of the end mill body to cut a workpiece while rotating in a tool rotation direction in a circumferential direction around the axial line of the end mill body.

Specifically, in the radius end mill, a plurality of chip discharge flutes extending from a tip of the end mill body toward a posterior end side of the end mill body are formed on an outer periphery of the end mill body at intervals in the circumferential direction.

In addition, the peripheral cutting edge is formed on an intersection ridge line between a wall surface facing the tool rotation direction in the chip discharge flute and an outer peripheral surface of the end mill body. Moreover, the end cutting edge is formed on an intersection ridge line between the wall surface of the chip discharge flute and a tip surface of the end mill body. In addition, the corner cutting edge which connects an outer end (an end edge on the outside in a radial direction) of the end cutting edge and the tip of the peripheral cutting edge and has a convexly curved shape is formed at a tip-outer peripheral part (corner part) of the wall surface of the chip discharge flute.

In general, in this kind of radius end mill, in order to increase a machining speed of cutting, a radial rake angle (outer peripheral rake angle) of the peripheral cutting edge is set to a positive angle.

Specifically, the peripheral cutting edge sharply cuts into the workpiece as the radial rake angle of the peripheral cutting edge is set to a larger positive angle, and sharpness increases. Since a cutting resistance decreases by increasing the sharpness, it is possible to increase a cutting speed and improve machining efficiency.

In the radius end mill of PTL 1, the radial rake angle of the peripheral cutting edge is -4° to 0° and is set to a negative angle close to a positive angle.

This is because the radius end mill of PTL 1 is configured of ceramic, and a tool angle increases and edge tip strength is secured by setting the radial rake angle of the peripheral cutting edge to a negative angle.

Moreover, for example, in the related art, a ball end mill disclosed in PTL 2 is known.

In general, a ball end mill is formed of cemented carbide or the like. The ball end mill disclosed in PTL 2 includes a shaft shaped end mill body, and a chip discharge flute, a peripheral cutting edge, and an end cutting edge (tip cutting edge) are formed in the end mill body.

In addition, a ball end mill includes a taper ball end mill, a long neck end mill, a taper neck end mill, or the like, in which a diameter of a peripheral cutting edge gradually increases from a tip toward a posterior end side in an axial line direction, in addition to a ball end mill in a narrow sense in which a diameter of a peripheral cutting edge is constant in an axial line direction.

During cutting operation, the ball end mill is fed in a direction intersecting an axial line of the end mill body to cut a workpiece while rotating in a tool rotation direction in a circumferential direction around the axial line of the end mill body.

Specifically, in the ball end mill, a plurality of chip discharge flutes extending from a tip of the end mill body toward a posterior end side of the end mill body are formed on an outer periphery of the end mill body at intervals in the circumferential direction. In addition, the peripheral cutting edge is formed on an intersection ridge line between a wall surface facing the tool rotation direction in the chip discharge flute and an outer peripheral surface of the end mill body. Moreover, the end cutting edge (tip cutting edge) is formed on an intersection ridge line between the wall surface of the chip discharge flute and a tip surface of the end mill body. In addition, the end cutting edge has a convexly arc shape which is convex toward a tip outer-peripheral side of the end mill body, is smoothly continued to a tip of the peripheral cutting edge, and extends from the tip of the peripheral cutting edge toward the axial line.

In ball end mill of PTL 2, in order to increase a machining speed of cutting, a radial rake angle (outer peripheral rake angle) of the peripheral cutting edge is set to a positive angle.

Specifically, the peripheral cutting edge sharply cuts into the workpiece as the radial rake angle of the peripheral cutting edge is set to a larger positive angle, and sharpness increases. Since a cutting resistance decreases by increasing the sharpness, it is possible to increase a cutting speed and improve machining efficiency.

As described above and disclosed in PTL 1, a radius end mill in which the end mill body is formed of ceramic is known. In the radius end mill, the radial rake angle of the peripheral cutting edge is -4° to 0° and is set to a negative angle close to a positive angle.

As described above, this is because the radius end mill of PTL 1 is configured of ceramic, and the tool angle increases and the edge tip strength is secured by setting the radial rake angle of the peripheral cutting edge to a negative angle.

### Citation List

### Patent Literature

[PTL 1] United States Patent No. 8647025
[PTL 2] Japanese Unexamined Patent Application, First Publication No. 2011-56649

### Summary of Invention

### Technical Problem

However, in the radius end mill of PTL 1, the peripheral cutting edge is abraded (worn) at an early stage, and a tool life is shortened. In order to decrease the abrasion of the peripheral cutting edge, it is preferable to decrease the cutting resistance during machining. That is, as described above, measures in which the radial rake angle of the peripheral cutting edge increases to a positive angle side to increase sharpness are considered.

However, since the radius end mill of PTL 1 is formed of ceramic, if the radial rake angle of the peripheral cutting edge increases to a positive angle side, the tool angle decreases and it is not possible to secure the edge tip strength.

Moreover, for this kind of radius end mill, it is required to increase the cutting speed so as to improve the machining efficiency.

In addition, with respect to the ball end mill of the related art, in the case where the end mill body is formed of ceramic and the radial rake angle of the peripheral cutting edge is set to -4° to 0° as in PTL 1, the peripheral cutting edge is abraded (worn) at an early stage, and there is a problem that the tool life is shortened. In order to decrease the abrasion of the peripheral cutting edge, it is preferable to decrease the cutting resistance during machining. That is, as described above, measures in which the radial rake angle of the peripheral cutting edge increases to a positive angle side to increase sharpness are considered.

However, in a case where the ball end mill is formed of ceramic, if the radial rake angle of the peripheral cutting edge increases to a positive angle side, as described above, the tool angle decreases and it is not possible to secure the edge tip strength.

Moreover, for this kind of ball end mill, it is required to increase the cutting speed so as to improve the machining efficiency.

The present invention is made in consideration of the above-described circumstances, and an object thereof is to provide a radius end mill, a ball end mill, and an end mill in which a cutting speed increases, machining efficiency can be improved, and a tool life can be extended while edge tip strength and an abrasion resistance of the peripheral cutting edge is sufficiently secured even when the end mill body is formed of ceramic.

### Solution to Problem

(1) According to an aspect of the present invention, a radius end mill is provided, including: a shaft-shaped end mill body which is formed of ceramic; a chip discharge flute which is formed on an outer periphery of the end mill body and gradually extends toward a side opposite to a tool rotation direction in a circumferential direction around an axial line from a tip toward a posterior end side in an axial line direction of the end mill body; a peripheral cutting edge which is formed on an intersection ridge line between a wall surface facing the tool rotation direction in the chip discharge flute and an outer peripheral surface of the end mill body; an end cutting edge which is formed on an intersection ridge line between the wall surface in the chip discharge flute and a tip surface of the end mill body; and a corner cutting edge which is positioned at a tip outer-peripheral part of the end mill body, connects an outer end of the end cutting edge and a tip of the peripheral cutting edge to each other, and has a convex curved shape which is convex toward a tip outer-peripheral side of the end mill body, in which a radial rake angle of at least the peripheral cutting edge among the peripheral cutting edge, the end cutting edge, and the corner cutting edge is set to a negative angle, and the radial rake angle of the peripheral cutting edge is -20° to -10°.

In the radius end mill of the present invention, the end mill body is formed of ceramic. In addition, the radial rake angle (outer peripheral rake angle) of at least the peripheral cutting edge among the peripheral cutting edge, the end cutting edge, and the corner cutting edge is set to a negative angle. Specifically, the radial rake angle of the peripheral cutting edge is -20° to -10°.

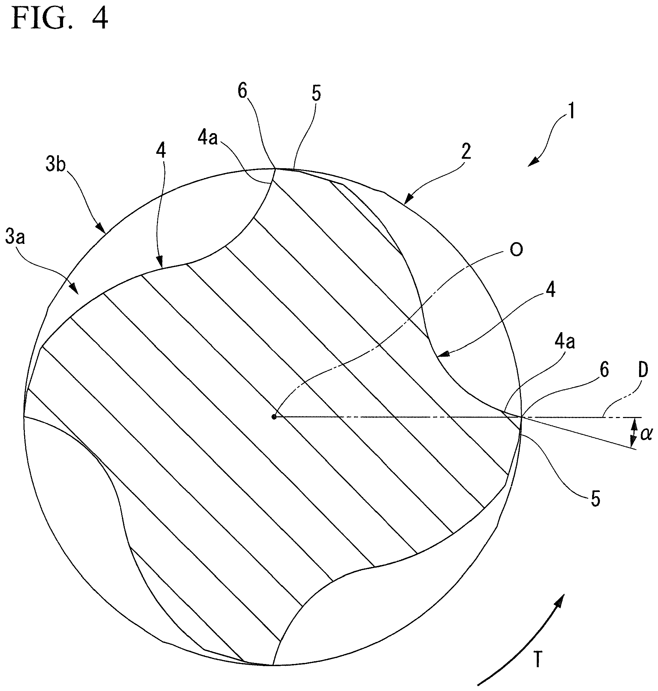

In the present specification, the "radial rake angle of the peripheral cutting edge" indicates, in a cross-sectional view (viewed from a cross section perpendicular to an axial line O of an end mill body 2) of the end mill body 2 shown in FIG. 4, an acute angle α among acute angles and obtuse angles which are formed between a virtual surface (corresponding to a so-called "reference surface") in a predetermined radial direction D passing through a peripheral cutting edge 6 among radial directions orthogonal to the axial line O and a rake face 4a (a wall surface portion facing a tool rotation direction T of a chip discharge flute 4 adjacent to the peripheral cutting edge 6) of the peripheral cutting edge 6.

In addition, in a case where the radial rake angle is "minus", that is, is a negative angle, the negative angle is the angle α when the rake face 4a of the peripheral cutting edge 6 extends so as to be inclined toward a side opposite to the tool rotation direction T as directing to the outside in the radial direction in a cross-sectional view of the end mill body 2 shown in FIG. 4. In this case, the rake face 4a of the peripheral cutting edge 6 is disposed on the tool rotation direction T side with respect to the virtual surface (reference surface) in the predetermined radial direction D.

In addition, although it is not particularly shown, in a case where the radial rake angle is "plus", that is, is a positive angle, the positive angle is the angle α when the rake face 4a of the peripheral cutting edge 6 extends so as to be inclined in the tool rotation direction T as directing to the outside in the radial direction in a cross-sectional view of the end mill body 2. In this case, the rake face 4a of the peripheral cutting edge 6 is disposed on the side opposite to the tool rotation direction T with respect to the virtual surface (reference surface) in the predetermined radial direction D.

In addition, in the present invention, the radial rake angle (the angle α) of the peripheral cutting edge is a negative angle and is largely set to a negative angle side such as -20° to -10°. Accordingly, during cutting operation, a cutting resistance of the peripheral cutting edge of the radius end mill with respect to a workpiece increases, and therefore, cutting heat (heat generated due to plastic deformation in a shear region, friction heat, or the like) also increases.

If the cutting heat increases, compared to a peripheral cutting edge of a radius end mill which is formed of ceramic and has a high heat resistance, a cutting surface (a machining target portion) of the workpiece is softened. That is, hardness of the machining target portion significantly decreases with respect to the peripheral cutting edge.

Accordingly, the peripheral cutting edge can perform cutting at a high speed so as to scrape off the workpiece. In addition, since the hardness of the radius end mill is higher than that of the softened workpiece, it is possible to remarkably decrease abrasion (wear) of the peripheral cutting edge and to extend a tool life.

That is, the inventors of the present invention have intensively researched about the radius end mill formed of ceramic, and as a result, the inventors made the findings that, cutting heat is intentionally increased during the cutting operation by setting the radial rake angle of the peripheral cutting edge to the above-described numerical range, the workpiece is softened while maintaining the hardness of the radius end mill, and it is possible to significantly increase a cutting speed by performing the cutting operation so as to scrape off the workpiece by a hardness difference therebetween.

That is, a cutting mode (machining aspect) by the radius end mill of the present invention is largely different from a cutting mode of a general radius end mill in the related art.

Specifically, according to the radius end mill of the present invention, for example, in a case where cutting operation is performed on heat-resistant alloy such as INCONEL (registered trademark) as a workpiece, compared to a general radius end mill (a product in the related art) formed of cemented carbide, it was confirmed that 10 times or more machining efficiency could be realized.

Moreover, in the peripheral cutting edge of the radius end mill of the present invention, a tool angle is sufficiently secured and edge tip strength is improved by setting the radial rake angle to the above-described numerical range. Accordingly, chipping or the like of the cutting edge does not easily occur.

Moreover, in a case where the radial rake angle of the peripheral cutting edge is less than -20°, that is, in a case where the radial rake angle largely increases to a negative angle side, sharpness of the peripheral cutting edge is excessively decreased, and it is difficult to increase the cutting speed even when the workpiece is softened by the cutting heat.

In addition, in a case where the radial rake angle of the peripheral cutting edge exceeds -10°, the radial rake angle is excessively close to a positive angle side and desired cutting heat cannot be obtained. That is, since the cutting heat is not sufficiently increased, the workpiece is not softened, the above-described effects of the present invention cannot be obtained, and there is a concern that the peripheral cutting edge is abraded at an early stage and reaches the tool life.

Accordingly, in the present invention, the radial rake angle of the peripheral cutting edge is -20° to -10°.

As described above, according to the present invention, even when the end mill body is formed of ceramic, it is possible to increase the cutting speed and improve machining efficiency while sufficiently securing the edge tip strength and the abrasion resistance of the peripheral cutting edge, and it is possible to extend the tool life.
(2) In the radius end mill of the present invention, preferably, the radial rake angle of the peripheral cutting edge is -17.5° to -12.5°.
   In this case, the above-described effects according to the present invention can be more reliably and stably obtained. Moreover, in a case where the radial rake angle of the peripheral cutting edge is -15°, the most remarkable effect is obtained.
(3) In the radius end mill of the present invention, preferably, a helix angle of the peripheral cutting edge is 30° to 40°.

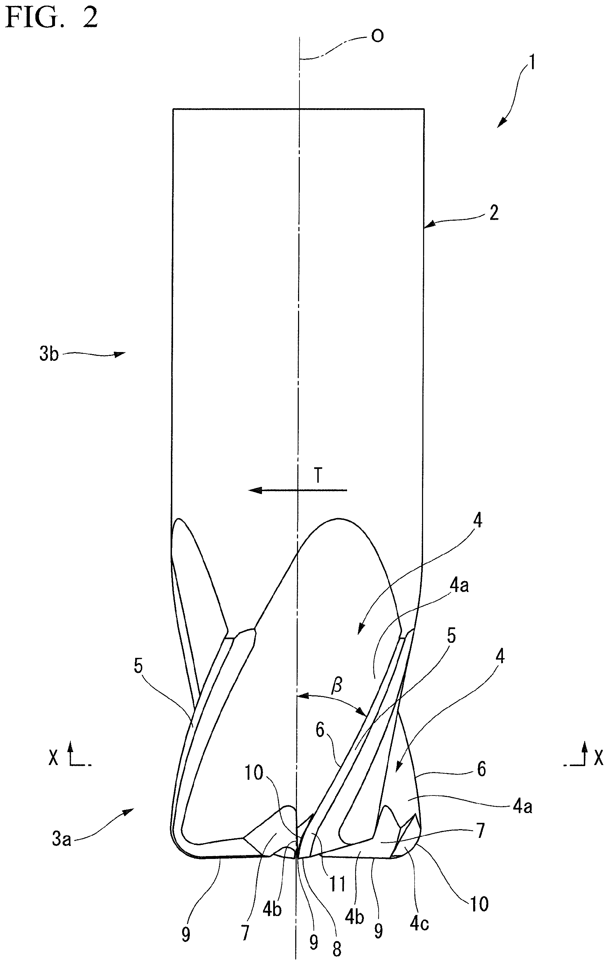

In the present specification, the "helix angle" indicates an acute angle β among acute angles and obtuse angles formed between the axial line O (or a straight line parallel to the axial line O) and the peripheral cutting edge 6 (pitch helix of twist) in a side view of the end mill body 2 shown in FIG. 2 (in a side view when the end mill body 2 is viewed in a radial direction orthogonal to the axial line O).

In general, for example, in a radius end mill (a product in the related art) formed of cemented carbide, the helix angle of the peripheral cutting edge is set to be larger than 40°. In this way, by setting the helix angle to a large positive angle, the peripheral cutting edge sharply cuts into a workpiece, and sharpness increases.

In the present invention, the helix angle of the peripheral cutting edge is set as small as 30° to 40° so as to intentionally increase the cutting resistance of the peripheral cutting edge with respect to a workpiece. Accordingly, during cutting operation, the cutting resistance of the peripheral cutting edge of the radius end mill with respect to the workpiece increases, and cutting heat (heat generated due to plastic deformation in a shear region, friction heat, or the like) also increases.

If the cutting heat increases, the cutting surface (a machining target portion) of the workpiece is softened compared to the peripheral cutting edge of the radius end mill which is formed of ceramic and which has a high heat resistance. That is, hardness of the machining target portion is significantly decreased compared to the peripheral cutting edge.

Accordingly, the peripheral cutting edge can perform cutting at a high speed so as to scrape off the workpiece. In addition, since the hardness of the radius end mill is higher than that of the softened workpiece, it is possible to remarkably decrease abrasion (wear) of the peripheral cutting edge and to extend a tool life.

That is, by setting the helix angle of the peripheral cutting edge to 30° to 40°, the above-described effects can be further remarkably exerted.

Specifically, since the helix angle of the peripheral cutting edge is more than 30°, it is possible to secure sharpness in the peripheral cutting edge sufficient to scrape off the workpiece softened by the cutting heat.

In addition, since the helix angle of the peripheral cutting edge is less than 40°, it is possible to increase the cutting resistance of the peripheral cutting edge enough to obtain the cutting heat sufficient to soften the workpiece.
(4) In the radius end mill of the present invention, preferably, the end mill body is formed of Sialon.
   In this case, since the end mill body is formed of Sialon (SiAlON), which is a ceramic material, the end mill body has improved heat resistance, thermal shock resistance, mechanical strength under a high-temperature environment, abrasion resistance, or the like. Accordingly, the above-described effects of the present invention can be further remarkably exerted and stably realized.
(5) According to another aspect of the present invention, a ball end mill is provided, including: a shaft-shaped end mill body which is formed of ceramic; a chip discharge flute which is formed on an outer periphery of the end mill body and gradually extends toward a side opposite to a tool rotation direction in a circumferential direction around an axial line from a tip toward a posterior end side in an axial line direction of the end mill body; a peripheral cutting edge which is formed on an intersection ridge line between a wall surface facing the tool rotation direction in the chip discharge flute and an outer peripheral surface of the end mill body; and an end cutting edge which is formed on an intersection ridge line between the wall surface in the chip discharge flute and a tip surface of the end mill body, has a convexly arc shape which is convex toward a tip outer-peripheral side of the end mill body, is smoothly continued to a tip of the peripheral cutting edge, and extends from the tip of the peripheral cutting edge toward the axial line, in which a radial rake angle of at least the peripheral cutting edge among the peripheral cutting edge and the end cutting edge is set to a negative angle, and the radial rake angle of the peripheral cutting edge is -20° to -10°.

In the ball end mill of the present invention, the end mill body is formed of ceramic. In addition, the radial rake angle (outer peripheral rake angle) of at least the peripheral cutting edge among the peripheral cutting edge and the end cutting edge is set to a negative angle. Specifically, the radial rake angle of the peripheral cutting edge is -20° to -10°.

In the present specification, the "ball end mill" includes a taper ball end mill, a long neck end mill, a taper neck end mill, or the like, in which a diameter (a distance from the axial line to the peripheral cutting edge in the radial direction orthogonal to the axial line, that is, a radius) of the peripheral cutting edge gradually increases from the tip toward the posterior end side in an axial line direction, in addition to a ball end mill in a narrow sense in which a diameter of the peripheral cutting edge is constant in the axial line direction.

That is, the present invention is applied to a ball end mill in a wide sense having various aspects, and remarkable effects described later are exerted.

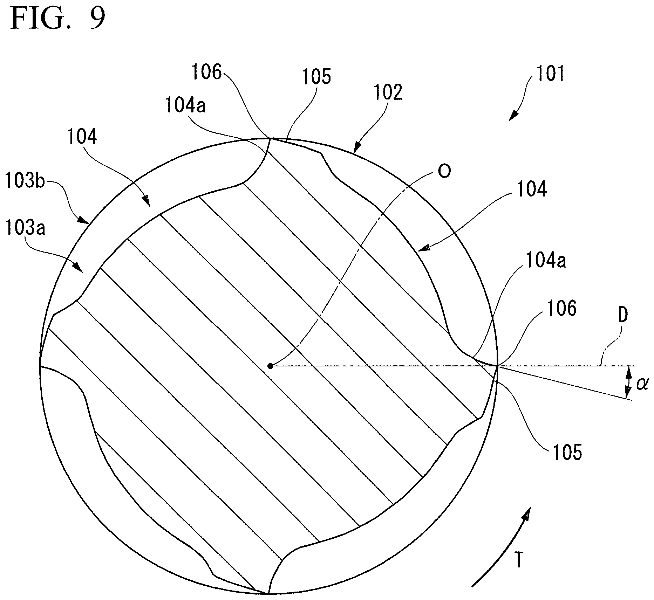

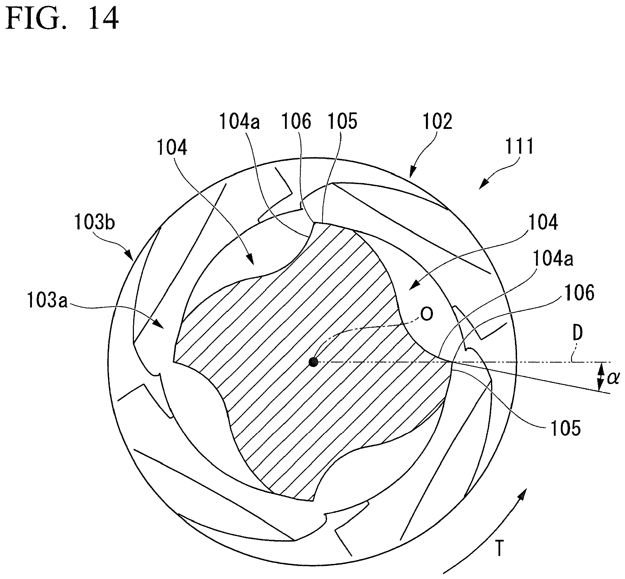

Moreover, in the present specification, the "radial rake angle of the peripheral cutting edge" indicates, in a cross-sectional view (viewed from a cross section perpendicular to an axial line O of an end mill body 102) of the end mill body 102 shown in FIGS. 9 and 14, an acute angle α among acute angles and obtuse angles which are formed between a virtual surface (corresponding to a so-called "reference surface") in a predetermined radial direction D passing through a peripheral cutting edge 106 among radial directions orthogonal to the axial line O and a rake face 104a (a wall surface portion facing a tool rotation direction T of a chip discharge flute 104 adjacent to the peripheral cutting edge 106) of the peripheral cutting edge 106.

In addition, in a case where the radial rake angle is "minus", that is, is a negative angle, the negative angle is the angle α when the rake face 104a of the peripheral cutting edge 106 extends so as to be inclined toward a side opposite to the tool rotation direction T as directing to the outside in the radial direction in a cross-sectional view of the end mill body 102 shown in FIGS. 9 and 14.

In this case, the rake face 104a of the peripheral cutting edge 106 is disposed in the tool rotation direction T side with respect to the virtual surface (reference surface) in the predetermined radial direction D.

Moreover, although it is not particularly shown, in a case where the radial rake angle is "plus", that is, is a positive angle, the positive angle is the angle α when the rake face 104a of the peripheral cutting edge 106 extends so as to be inclined in the tool rotation direction T as directing to the outside in the radial direction in a cross-sectional view of the end mill body 102.

In this case, the rake face 104a of the peripheral cutting edge 106 is disposed on the side opposite to the tool rotation direction T with respect to the virtual surface (reference surface) in the predetermined radial direction D.

In addition, in the present invention, the radial rake angle (the angle α) of the peripheral cutting edge is a negative angle and is largely set to a negative angle side such as -20° to -10°.

Accordingly, during cutting operation, a cutting resistance of the peripheral cutting edge of the ball end mill with respect to a workpiece increases, and therefore, cutting heat (heat generated due to plastic deformation in a shear region, friction heat, or the like) also increases.

If the cutting heat increases, compared to a peripheral cutting edge of a ball end mill which is formed of ceramic and has a high heat resistance, a cutting surface (a machining target portion) of the workpiece is softened. That is, hardness of the machining target portion significantly decreases with respect to the peripheral cutting edge.

Accordingly, the peripheral cutting edge can perform cutting at a high speed so as to scrape off the workpiece. In addition, since the hardness of the ball end mill is higher than that of the softened workpiece, it is possible to remarkably decrease abrasion (wear) of the peripheral cutting edge and to extend a tool life.

That is, the inventors of the present invention have intensively researched about the ball end mill formed of ceramic, and as a result, the inventors made the findings that, cutting heat is intentionally increased during the cutting operation by setting the radial rake angle of the peripheral cutting edge to the above-described numerical range, the workpiece is softened while maintaining the hardness of the ball end mill, and it is possible to significantly increase a cutting speed by performing the cutting operation so as to scrape off the workpiece by a hardness difference therebetween.

That is, a cutting mode (machining aspect) by the ball end mill of the present invention is largely different from a cutting mode of a general ball end mill in the related art.

Specifically, according to the ball end mill of the present invention, for example, in a case where cutting operation is performed on heat-resistant alloy such as INCONEL (registered trademark) as a workpiece, compared to a general ball end mill (a product in the related art) formed of cemented carbide, it was confirmed that 10 times or more machining efficiency could be realized.

Moreover, in the peripheral cutting edge of the ball end mill of the present invention, a tool angle is sufficiently secured and edge tip strength is improved by setting the radial rake angle to the above-described numerical range. Accordingly, chipping or the like of the cutting edge does not easily occur. In addition, since the tool angle of the peripheral cutting edge is large and the edge tip strength increases, it is possible to stably perform cutting operation (side surface machining) using the peripheral cutting edge even though it is the ball end mill.

Moreover, in a case where the radial rake angle of the peripheral cutting edge is less than -20°, that is, in a case where the radial rake angle largely increases to a negative angle side, sharpness of the peripheral cutting edge is excessively decreased. Accordingly, it is difficult to increase the cutting speed even when the workpiece is softened by the cutting heat.

In addition, in a case where the radial rake angle of the peripheral cutting edge exceeds -10°, the radial rake angle is excessively close to a positive angle side and desired cutting heat cannot be obtained. That is, since the cutting heat is not sufficiently increased, the workpiece is not softened, the above-described effects of the present invention cannot be obtained, and there is a concern that the peripheral cutting edge is abraded at an early stage and reaches the tool life.

Accordingly, in the present invention, the radial rake angle of the peripheral cutting edge is -20° to -10°.

As described above, according to the present invention, even when the end mill body is formed of ceramic, it is possible to increase the cutting speed and improve machining efficiency while sufficiently securing the edge tip strength and the abrasion resistance of the peripheral cutting edge, and it is possible to extend the tool life.
(6) In the ball end mill of the present invention, preferably, the radial rake angle of the peripheral cutting edge is -17.5° to -12.5°.
   In this case, the above-described effects according to the present invention can be more reliably and stably obtained. Moreover, in a case where the radial rake angle of the peripheral cutting edge is -15°, the most remarkable effect is obtained.
(7) In the ball end mill of the present invention, preferably, a helix angle of the peripheral cutting edge is 30° to 40°.

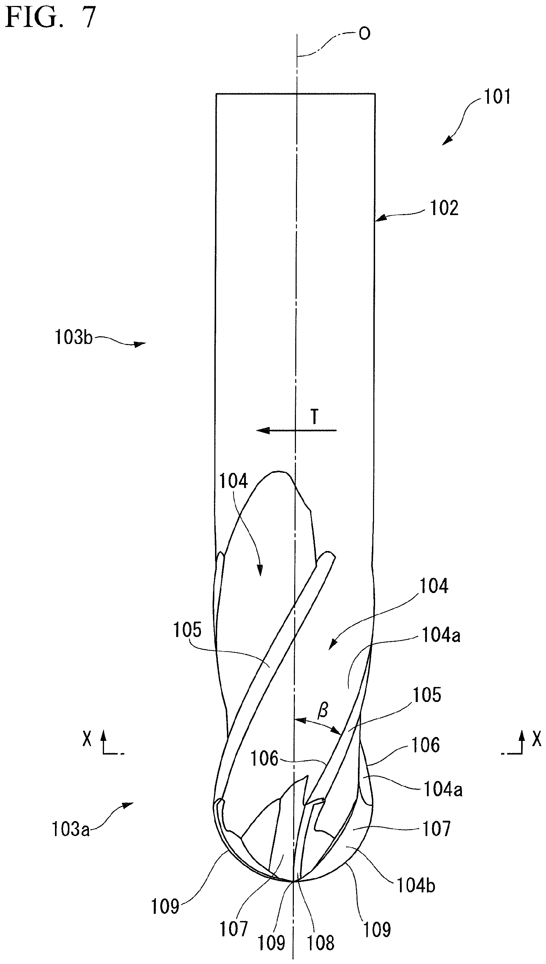

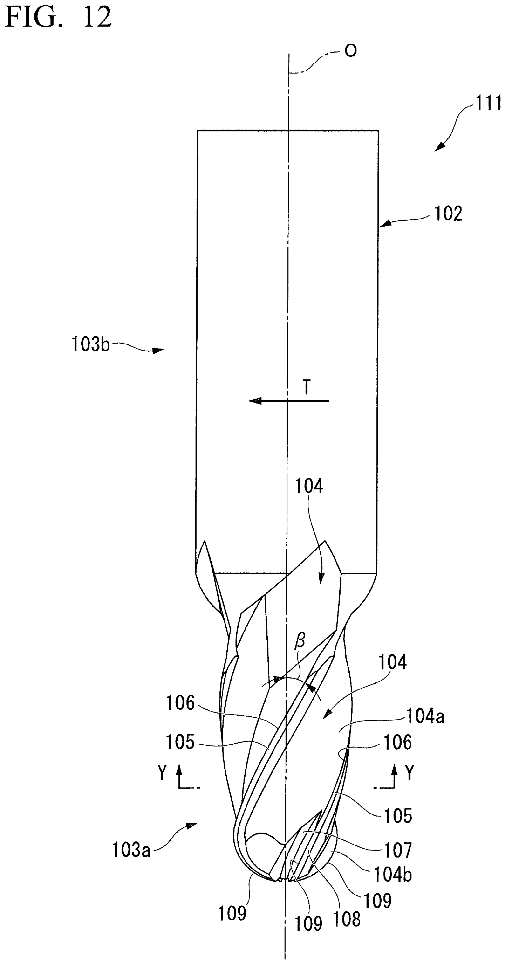

In the present specification, the "helix angle" indicates an acute angle β among acute angles and obtuse angles formed between the axial line O (or a straight line parallel to the axial line O) and the peripheral cutting edge 106 (pitch helix of twist) in a side view of the end mill body 102 shown in FIGS. 7 and 12 (in a side view when the end mill body 102 is viewed in a radial direction orthogonal to the axial line O).

In general, for example, in a ball end mill (a product in the related art) formed of cemented carbide, the helix angle of the peripheral cutting edge is set to be larger than 40°. In this way, by setting the helix angle to a large positive angle, the peripheral cutting edge sharply cuts into a workpiece, and sharpness increases.

In the present invention, the helix angle of the peripheral cutting edge is set as small as 30° to 40° so as to intentionally increase the cutting resistance of the peripheral cutting edge with respect to a workpiece. Accordingly, during cutting operation, the cutting resistance of the peripheral cutting edge of the ball end mill with respect to the workpiece increases, and cutting heat (heat generated due to plastic deformation in a shear region, friction heat, or the like) also increases.

If the cutting heat increases, the cutting surface (a machining target portion) of the workpiece is softened compared to the peripheral cutting edge of the ball end mill which is formed of ceramic and which has a high heat resistance. That is, hardness of the machining target portion is significantly decreased compared to the peripheral cutting edge.

Accordingly, the peripheral cutting edge can perform cutting at a high speed so as to scrape off the workpiece. In addition, since the hardness of the ball end mill is higher than that of the softened workpiece, it is possible to remarkably decrease abrasion (wear) of the peripheral cutting edge and to extend a tool life.

That is, by setting the helix angle of the peripheral cutting edge to 30° to 40°, the above-described effects can be further remarkably exerted.

Specifically, since the helix angle of the peripheral cutting edge is more than 30°, it is possible to secure sharpness in the peripheral cutting edge sufficient to scrape off the workpiece softened by the cutting heat.

In addition, since the helix angle of the peripheral cutting edge is less than 40°, it is possible to increase the cutting resistance of the peripheral cutting edge enough to obtain the cutting heat sufficient to soften the workpiece.

(8) In the ball end mill of the present invention, preferably, the end mill body is formed of Sialon.

In this case, since the end mill body is formed of Sialon (SiAlON), which is a ceramic material, the end mill body has improved heat resistance, thermal shock resistance, mechanical strength under a high-temperature environment, abrasion resistance, or the like. Accordingly, the above-described effects of the present invention can be further remarkably exerted and stably realized.
(9) According to still another aspect of the present invention, an end mill is provided, including: a shaft-shaped end mill body which is formed of ceramic; a chip discharge flute which is formed on an outer periphery of the end mill body and gradually extends toward a side opposite to a tool rotation direction in a circumferential direction around an axial line from a tip toward a posterior end side in an axial line direction of the end mill body; a peripheral cutting edge which is formed on an intersection ridge line between a wall surface facing the tool rotation direction in the chip discharge flute and an outer peripheral surface of the end mill body; and an end cutting edge which is formed on an intersection ridge line between the wall surface in the chip discharge flute and a tip surface of the end mill body, in which the end cutting edge is formed such that an outer end of the end cutting edge is positioned at a tip outer-peripheral part of the end mill body and is connected to a tip of the peripheral cutting edge via a corner cutting edge having a convex curved shape which is convex toward a tip outer-peripheral side of the end mill body, or is formed to have a convexly arc shape which is convex toward the tip outer-peripheral side of the end mill body, is smoothly continued to a tip of the peripheral cutting edge, and to extend from the tip of the peripheral cutting edge toward the axial line, and a radial rake angle of the peripheral cutting edge is set to a negative angle of -20° to -10°.

### Advantageous Effects of Invention

According to the present invention, even when the end mill body is formed of ceramic, it is possible to improve machining efficiency by increasing a cutting speed and to extend a tool life while sufficiently securing edge tip strength and an abrasion resistance of the peripheral cutting edge.

### Brief Description of Drawings

FIG. 1 is a perspective view showing a radius end mill according to a first embodiment of the present invention.
FIG. 2 is a side view showing the radius end mill of FIG. 1.
FIG. 3 is a front view showing the radius end mill of FIG. 1.
FIG. 4 is a sectional view taken along line X-X of FIG. 2.
FIG. 5 is a graph in which Examples of the present invention (First Embodiment) and Comparative Examples of the related art are compared to each other, and shows a relationship between a radial rake angle of a peripheral cutting edge and a cutting length.
FIG. 6 is a perspective view showing a ball end mill according to a second embodiment of the present invention.
FIG. 7 is a side view showing the ball end mill of FIG. 6.
FIG. 8 is a front view showing the ball end mill of FIG. 6.
FIG. 9 is a sectional view taken along line X-X of FIG. 7.
FIG. 10 is a graph in which Examples of the present invention (Second Embodiment) and Comparative Examples of the related art are compared to each other, and shows a relationship between a radial rake angle of a peripheral cutting edge and a cutting length.
FIG. 11 is a perspective view showing a ball end mill (taper ball end mill) according to a third embodiment of the present invention.
FIG. 12 is a side view showing the ball end mill of FIG. 11.
FIG. 13 is a front view showing the ball end mill of FIG. 11.
FIG. 14 is a sectional view taken along line Y-Y of FIG. 12.
FIG. 15 is a graph in which Examples of the present invention (Third Embodiment) and Comparative Examples of the related art are compared to each other, and shows a relationship between a radial rake angle of a peripheral cutting edge and a cutting length.

### Description of Embodiments

### <First Embodiment>

Hereinafter, a first embodiment of an end mill according to the present invention will be described with reference to the drawings.

In the first embodiment, for example, a radius end mill will be described as the end mill.

### [Schematic Configuration of Radius End Mill and End Mill Body]

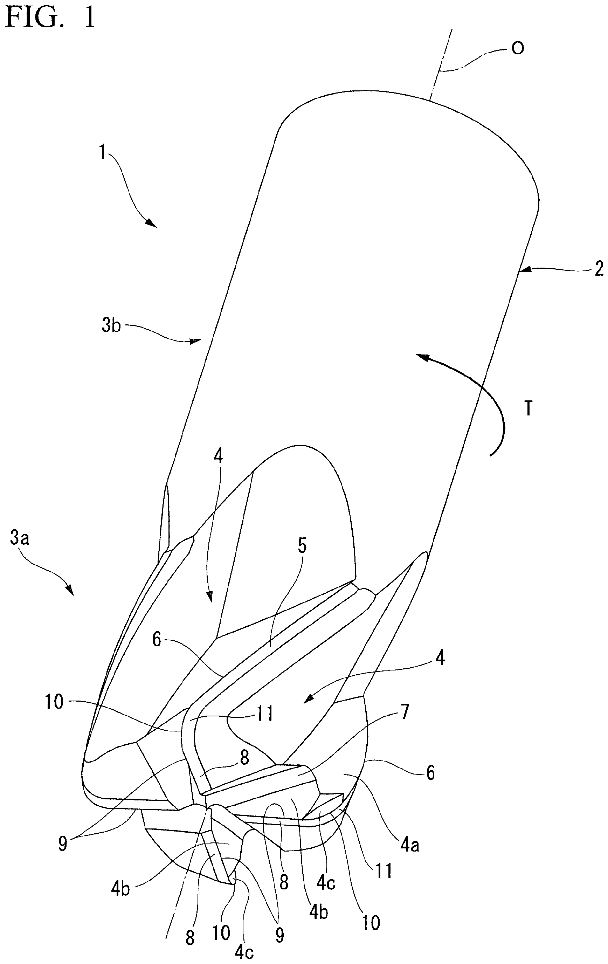

As shown in FIGS. 1 to 3, a radius end mill 1 of the present embodiment includes an end mill body 2 which has a shaft shape and is formed of ceramic. Specifically, the end mill body 2 is formed of Sialon (SiAlON), which is a ceramic material.

The end mill body 2 is formed in an approximately columnar shape, and a cutting part 3a is formed on at least a tip part in a direction of an axial line O of the end mill body 2. A part of the end mill body 2 except for the cutting part 3a is a shank part 3b.

The shank part 3b which is formed in a columnar shape in the end mill body 2 is held by a main shaft or the like of a machine tool, and the radius end mill 1 is rotated in a tool rotation direction T around the axial line O and is used in cutting operation (tool rotating-cutting process) of a workpiece configured of a metal material or the like.

In addition, the radius end mill 1 is fed in a direction intersecting the axial line O while being rotated as described above, and for example, performs shoulder milling machining, groove machining, R milling machining, profile machining, or the like on the workpiece by the cutting part 3a.

In addition, particularly, the radius end mill 1 of the present embodiment is suitable for a cutting operation of heat-resistant alloy (hard-to-cut material) such as INCONEL (registered trademark) as the workpiece.

In addition, when cutting operation is performed on the workpiece by the radius end mill 1, a coolant is injected to the cutting part 3a of the radius end mill 1 and a cutting surface (a machining target portion) of the workpiece. Preferably, dry-ice powder is used as the coolant.

### [Definition of Orientation (Direction) Used in the Present Specification]

In the present specification, in the direction of the axial line O of the end mill body 2, a direction from the shank part 3b toward the cutting part 3a is referred to as a tip side, and a direction from the cutting part 3a toward the shank part 3b is referred to as a posterior end side.

In addition, a direction orthogonal to the axial line O is referred to as a radial direction, and in the radial direction, a direction approaching the axial line O is referred to as an inside in the radial direction, and a direction separated from the axial line O is referred to as an outside in the radial direction.

Moreover, a direction circulating around the axial line O is referred to as a circumferential direction, and in the circumferential direction, a direction in which the end mill body 2 rotates during the cutting operation is referred to as the tool rotation direction T, and a direction toward the side opposite to the tool rotation direction T is referred to as a direction opposite to the tool rotation direction T.

### [Chip Discharge Flute]

A plurality of chip discharge flutes 4 are formed on the outer periphery of the cutting part 3a at intervals in the circumferential direction.

The chip discharge flutes 4 are open to the tip surface of the end mill body 2 and extend while being gradually twisted toward the side opposite to the tool rotation direction T from the tip surface toward the posterior end side. The chip discharge flutes 4 terminate at the outer periphery of the end mill body 2 on the end portion on the posterior end side of the cutting part 3a.

In the radius end mill 1 of the present embodiment, four chip discharge flutes 4 are formed at intervals (equal intervals or unequal intervals) in the circumferential direction.

Each chip discharge flute 4 has a wall surface facing the tool rotation direction T, and a portion of the wall surface adjacent to a cutting edge becomes a rake face. Specifically, among the rake faces of the cutting edge, a portion of the cutting edge adjacent to a peripheral cutting edge 6 described below, a portion thereof adjacent to an end cutting edge 9 described below, and a portion thereof adjacent to a corner cutting edge 10 described below are respectively referred to as a rake face 4a of the peripheral cutting edge 6, a rake face 4b of the end cutting edge 9, and a rake face 4c of the corner cutting edge 10.

A gash 7 which is formed by cutting a tip part of the chip discharge flute 4 in a groove shape in the radial direction is formed on the tip part of the chip discharge flute 4. Specifically, the gash 7 of the present embodiment is formed in a trapezoidal cross-sectional groove shape extending in the radial direction on the tip part of the chip discharge flute 4, and the end portion of the gash 7 on the inside in the radial direction reaches the axial line O.

In the present embodiment, four gashes 7 corresponding to the four chip discharge flutes 4 are formed. The gashes 7 communicate with each other on the end portion (the center of the tip surface of the end mill body 2 in the radial direction, that is, the axial line O) on the inside in the radial direction.

### [Cutting Edge]

The cutting part 3a includes a plurality of cutting edges at intervals in the circumferential direction. Each cutting edge includes the peripheral cutting edge 6, the corner cutting edge 10, and the end cutting edge 9. The peripheral cutting edge 6, the corner cutting edge 10, and the end cutting edge 9 are smoothly continuous to each other to form one L-shaped cutting edge.

The radius end mill 1 of the present embodiment includes the cutting part 3a having four edges (four cutting edges). However, the number of the cutting edges (the number of sets of the peripheral cutting edges 6, the corner cutting edges 10, and the end cutting edges 9 continuous in an L shape) of the radius end mill 1 is not limited to four described in the present embodiment, and for example, may be three or less or five or more. Moreover, the number of the cutting edges corresponds to the number of the chip discharge flutes 4.

### [Peripheral Cutting Edge]

The peripheral cutting edge 6 is formed on an intersection ridge line between the wall surface facing the tool rotation direction T in the chip discharge flute 4 and an outer peripheral surface of the end mill body 2. The peripheral cutting edge 6 extends in a pitch helix shape (spiral) along an outer peripheral end edge of the wall surface of the chip discharge flute 4.

Specifically, the peripheral cutting edge 6 is formed on an intersection ridge line between the rake face 4a positioned at the end portion on the outside in the radial direction of the wall surface facing the tool rotation direction T of the chip discharge flute 4 and an outer peripheral-flank face 5 adjacent to the side opposite to the tool rotation direction T of the chip discharge flute 4 of the outer peripheral surface of the cutting part 3a.

The outer peripheral-flank face 5 is formed on the outer peripheral surface of the cutting part 3a between the chip discharge flutes 4 adjacent in the circumferential direction. A width (a length in a direction orthogonal to the peripheral cutting edge 6) of the outer peripheral-flank face 5 is approximately constant in the extension direction of the peripheral cutting edge 6.

Specifically, in the cutting part 3a, the peripheral cutting edges 6 having the number (four) corresponding to the number (four) of the chip discharge flutes 4 are formed at intervals to each other in the circumferential direction. The peripheral cutting edge 6 extends while being gradually twisted toward the side opposite to the tool rotation direction T from the tip of the end mill body 2 toward the posterior end side with the same lead as the chip discharge flute 4.

A rotation locus which is formed by rotating the peripheral cutting edge 6 around the axial line O is a single cylindrical surface with the axial line O as a center.

In addition, a radial rake angle (angle α) of the peripheral cutting edge 6 is set to a negative angle in a cross-sectional view of the end mill body 2 (viewed from a cross section perpendicular to the axial line O of the end mill body 2) shown in FIG. 4.

Specifically, the radial rake angle of the peripheral cutting edge 6 is -20° to -10°. Preferably, the radial rake angle of the peripheral cutting edge 6 is -17.5° to -12.5°.

In the present specification, the "radial rake angle of the peripheral cutting edge 6" indicates, in a cross-sectional view of the end mill body 2 shown in FIG. 4, an acute angle α among acute angles and obtuse angles which are formed between a virtual surface (corresponding to a so-called "reference surface") formed in a predetermined radial direction D passing through a peripheral cutting edge 6 among radial directions orthogonal to the axial line O and the rake face 4a (a wall surface portion facing a tool rotation direction T of a chip discharge flute 4 adjacent to the peripheral cutting edge 6) of the peripheral cutting edge 6.

In addition, in a case where the radial rake angle is "minus", that is, is a negative angle, the negative angle is an angle α when the rake face 4a of the peripheral cutting edge 6 extends so as to be inclined toward the side opposite to the tool rotation direction T as directing to the outside in the radial direction in a cross-sectional view of the end mill body 2 shown in FIG. 4.

In this case, the rake face 4a of the peripheral cutting edge 6 is disposed on the tool rotation direction T side with respect to the virtual surface (reference surface) formed in the predetermined radial direction D.

In addition, although it is not particularly shown, in a case where the radial rake angle is "plus", that is, is a positive angle, the positive angle is the angle α when the rake face 4a of the peripheral cutting edge 6 extends so as to be inclined in the tool rotation direction T as directing to the outside in the radial direction in a cross-sectional view of the end mill body 2.

Accordingly, in this case, the rake face 4a of the peripheral cutting edge 6 is disposed on the side opposite to the tool rotation direction T with respect to the virtual surface (reference surface) formed in the predetermined radial direction D.

In the present embodiment, the radial rake angle of at least the peripheral cutting edge 6 among the peripheral cutting edge 6, the end cutting edge 9, and the corner cutting edge 10 configuring the cutting edge is set to a negative angle, and the radial rake angle of the peripheral cutting edge 6 is set to the above-described numerical range.

Moreover, except for the peripheral cutting edge 6, the radial rake angle of at least one cutting edge of the end cutting edge 9 and the corner cutting edge 10 may be set to a negative angle.

In addition, a helix angle (angle β) of the peripheral cutting edge 6 is 30° to 40° in a side view of the end mill body 2 shown in FIG. 2 (in a side view when the end mill body 2 is viewed in the radial direction orthogonal to the axial line O). Preferably, the helix angle of the peripheral cutting edge 6 is less than 39°. More preferably, the helix angle of the peripheral cutting edge 6 is 30° to 35°.

In the present specification, the "helix angle" indicates the acute angle β among acute angles and obtuse angles formed between the axial line O (or a straight line parallel to the axial line O) and the peripheral cutting edge 6 (pitch helix of twist) in a side view of the end mill body 2 shown in FIG. 2.

### [End Cutting Edge (Tip Cutting Edge)]

As shown in FIGS. 1 to 3, the end cutting edge (tip cutting edge) 9 is formed on an intersection ridge line between the wall surface facing the tool rotation direction T in the chip discharge flute 4 and the tip surface of the end mill body 2. The end cutting edge 9 straightly extends along the tip edge of the wall surface of the chip discharge flute 4.

Specifically, the end cutting edge 9 is formed on an intersection ridge line between the rake face 4b positioned at the end portion on the tip side of the wall surface facing the tool rotation direction T of the chip discharge flute 4 (gash 7) and a tip-flank face 8 adjacent to the side opposite to the tool rotation direction T of the chip discharge flute 4 of the tip surface of the cutting part 3a.

The tip-flank face 8 is formed on the tip surface of the cutting part 3a between the chip discharge flutes 4 adjacent in the circumferential direction. A width (a length in a direction orthogonal to the end cutting edge 9) of the tip-flank face 8 is approximately constant in the extension direction of the end cutting edge 9.

Specifically, in the cutting part 3a, the end cutting edges 9 having the number (four) corresponding to the number (four) of the chip discharge flutes 4 are formed at intervals to each other in the circumferential direction.

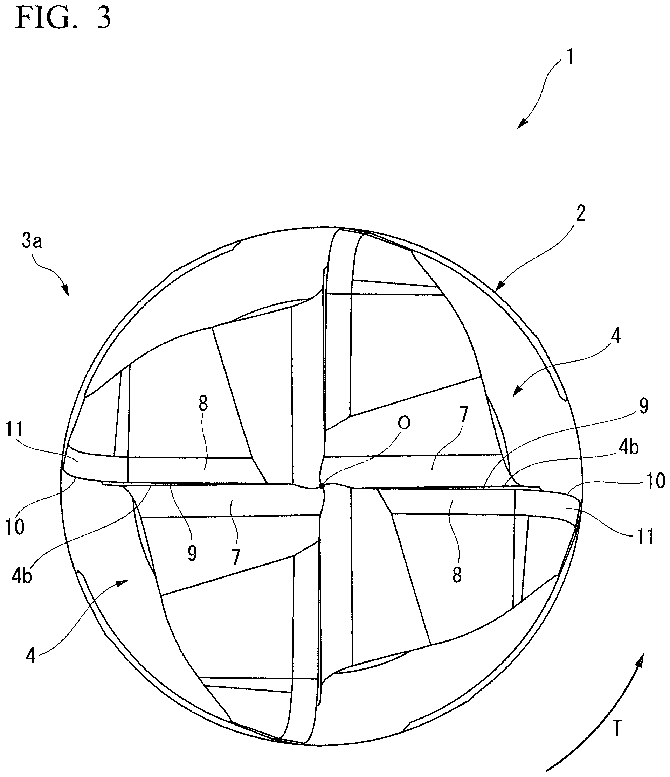

In the present embodiment, in a front view of the end mill body 2 shown in FIG. 3 (when the tip surface of the end mill body 2 is viewed from the front surface in the direction of the axial line O), the end cutting edge 9 extends in the radial direction, and the inner end (the end edge on the inside in the radial direction) of the end cutting edge 9 is positioned further outside in the radial direction than the axial line O.

Moreover, in a side view of the end mill body 2 shown in FIG. 2, the end cutting edge 9 slightly extends (is inclined) to the posterior end side gradually from the outer end (the end edge on the outside in the radial direction) toward the inside in the radial direction. Accordingly, a rotation locus formed by rotating the end cutting edge 9 around the axial line O becomes a conical surface (taper surface) which is gradually inclined to the posterior end side from the outer end of the end cutting edge 9 toward the inside in the radial direction.

Moreover, the end cutting edge 9 may extend so as to include a plane perpendicular to the axial line O, and in this case, the rotation locus of the end cutting edge 9 becomes a plane perpendicular to the axial line O.

As shown in FIG. 2, a rake angle (approximately corresponding to an axial rake angle) of the end cutting edge 9 is set to a negative angle close to 0° or is set to 0°. That is, the rake face 4b of the end cutting edge 9 is formed to be gradually inclined in the tool rotation direction T or is formed to be parallel to the axial line O from the tip (end cutting edge 9) toward the posterior end side.

Moreover, the rake angle of the end cutting edge 9 may be set to a positive angle. In this case, the rake face 4b of the end cutting edge 9 is gradually inclined toward the side opposite to the tool rotation direction T from the tip toward the posterior end side.

### [Corner Cutting Edge]

As shown in FIGS. 1 to 3, the corner cutting edge 10 is formed on a part (a corner part) positioned on the tip-outer peripheral part of the end mill body 2 of the wall surface facing the tool rotation direction T in the chip discharge flute 4. The corner cutting edge 10 is smoothly connected to the outer end of the end cutting edge 9 and the tip of the peripheral cutting edge 6 and has a convexly curved shape which is convex toward the tip outer-peripheral side of the end mill body 2.

Specifically, the corner cutting edge 10 is formed on an intersection ridge line between the rake face 4c positioned at the tip-outer peripheral part of the wall surface facing the tool rotation direction T of the chip discharge flute 4 and a corner-flank face 11 adjacent to the side opposite to the tool rotation direction T of the chip discharge flute 4 of the tip outer peripheral surface of the cutting part 3a.

The corner-flank face 11 smoothly connects the end portion on the outside in the radial direction of the tip-flank face 8 and the tip part of the outer peripheral-flank face 5 to each other, and has a convexly curved-surface shape which is convex toward the tip outer-peripheral side of the end mill body 2.

The corner-flank face 11 is formed on the tip outer peripheral surface of the cutting part 3a between the chip discharge flutes 4 adjacent in the circumferential direction. A width (a length in a direction orthogonal to the corner cutting edge 10) of the corner-flank face 11 is approximately constant in the extension direction of the corner cutting edge 10.

Specifically, in the cutting part 3a, the corner cutting edges 10 having the number (four) corresponding to the number (four) of the chip discharge flutes 4 are formed at intervals to each other in the circumferential direction.

In the present embodiment, in a front view of the end mill body 2 shown in FIG. 3, the corner cutting edge 10 has a convexly curved shape which is convex in the tool rotation direction T and toward the outside in the radial direction. Moreover, in a side view of the end mill body 2 shown in FIG. 2, the corner cutting edge 10 (refer to the corner cutting edge 10 positioned so as to be close to the axial line O) has a convexly curved shape which is convex in the tool rotation direction T and toward the posterior end side.

The rake angle of the corner cutting edge 10 is set to a positive angle. That is, the rake face 4c of the corner cutting edge 10 is gradually inclined to the side opposite to the tool rotation direction T from the tip outer-peripheral edge (corner cutting edge 10) toward the inside in the radial direction and the posterior end side.

Moreover, the rake angle of the corner cutting edge 10 may be set to a negative angle. In this case, the rake face 4c of the corner cutting edge 10 is gradually inclined in the tool rotation direction T from the tip outer-peripheral edge toward the inside in the radial direction and the posterior end side. Moreover, the rake angle of the corner cutting edge 10 may be set to 0°.

### [Effects by the Present Embodiment]

According to the radius end mill 1 of the above-described present embodiment, the end mill body 2 is formed of ceramic. In addition, the radial rake angle (outer peripheral rake angle, angle α in FIG. 4) of at least the peripheral cutting edge 6 among the peripheral cutting edge 6, the end cutting edge 9, and the corner cutting edge 10 is set to a negative angle. Specifically, the radial rake angle of the peripheral cutting edge 6 is -20° to -10°.

Accordingly, during cutting operation, a cutting resistance of the peripheral cutting edge 6 of the radius end mill 1 with respect to a workpiece increases, and therefore, cutting heat (heat generated due to plastic deformation in a shear region, friction heat, or the like) also increases.

If the cutting heat increases, compared to a peripheral cutting edge 6 of a radius end mill 1 which is formed of ceramic and has a high heat resistance, a cutting surface (a machining target portion) of the workpiece is softened. That is, hardness of the machining target portion significantly decreases with respect to the peripheral cutting edge 6.

Accordingly, the peripheral cutting edge 6 can perform cutting at a high speed so as to scrape off the workpiece. In addition, since the hardness of the radius end mill 1 is higher than that of the softened workpiece, it is possible to remarkably decrease abrasion (wear) of the peripheral cutting edge 6 and to extend a tool life.

That is, the inventors of the present invention have intensively researched about the radius end mill 1 formed of ceramic, and as a result, the inventors made the findings that, cutting heat is intentionally increased during the cutting operation by setting the radial rake angle of the peripheral cutting edge 6 to the above-described numerical range, the workpiece is softened while maintaining the hardness of the radius end mill 1, and it is possible to significantly increase a cutting speed by performing the cutting operation so as to scrape off the workpiece by a hardness difference therebetween.

That is, a cutting mode (machining aspect) by the radius end mill 1 of the present embodiment is largely different from a cutting mode of a general radius end mill in the related art.

Specifically, according to the radius end mill 1 of the present embodiment, for example, in a case where cutting operation is performed on heat-resistant alloy such as INCONEL (registered trademark) as a workpiece, compared to a general radius end mill (a product in the related art) formed of cemented carbide, it was confirmed that 10 times or more machining efficiency could be realized.

Moreover, in the peripheral cutting edge 6 of the radius end mill 1 of the present embodiment, a tool angle is sufficiently secured and edge tip strength is improved by setting the radial rake angle to the above-described numerical range. Accordingly, chipping or the like of the edge does not easily occur.

Moreover, in a case where the radial rake angle of the peripheral cutting edge 6 is less than -20°, that is, in a case where the radial rake angle largely increases to a negative angle side, sharpness of the peripheral cutting edge 6 is excessively decreased, and it is difficult to increase the cutting speed even when the workpiece is softened by the cutting heat.

In addition, in a case where the radial rake angle of the peripheral cutting edge 6 exceeds -10°, the radial rake angle is excessively close to a positive angle side and desired cutting heat cannot be obtained. That is, since the cutting heat is not sufficiently increased, the workpiece is not softened, the above-described effects of the present embodiment cannot be obtained, and there is a concern that the peripheral cutting edge 6 is abraded at an early stage and reaches the tool life.

Accordingly, in the present embodiment, the radial rake angle of the peripheral cutting edge 6 is -20° to -10°.

As described above, according to the present embodiment, even when the end mill body 2 is formed of ceramic, it is possible to increase the cutting speed and improve machining efficiency while sufficiently securing the edge tip strength or the abrasion resistance of the peripheral cutting edge 6, and it is possible to extend the tool life.

Moreover, in the case where the radial rake angle of the peripheral cutting edge 6 is -17.5° to -12.5°, the above-described effects according to the present embodiment can be more reliably and stably obtained.

Moreover, in a case where the radial rake angle of the peripheral cutting edge 6 is -15°, the most remarkable effect is obtained.

In addition, in the present embodiment, since the helix angle (angle β in FIG. 2) of the peripheral cutting edge 6 is 30° to 40°, the following effects are exerted.

In general, for example, in a radius end mill (a product in the related art) formed of cemented carbide, the helix angle of the peripheral cutting edge is set to be larger than 40°. This is because the peripheral cutting edge sharply cuts into a workpiece and sharpness increases by setting the helix angle to a large positive angle.

In the above-described configuration of the present embodiment, the helix angle of the peripheral cutting edge 6 is set as small as 30° to 40° so as to intentionally increase the cutting resistance of the peripheral cutting edge 6 with respect to a workpiece. Accordingly, during cutting operation, the cutting resistance of the peripheral cutting edge 6 of the radius end mill 1 with respect to the workpiece increases, and cutting heat (heat generated due to plastic deformation in a shear region, friction heat, or the like) also increases.

If the cutting heat increases, the cutting surface (a machining target portion) of the workpiece is softened compared to the peripheral cutting edge 6 of the radius end mill 1 which is formed of ceramic and which has a high heat resistance. That is, hardness of the machining target portion is significantly decreased compared to the peripheral cutting edge 6.

Accordingly, the peripheral cutting edge 6 can perform cutting at a high speed so as to scrape off the workpiece. In addition, since the hardness of the radius end mill 1 is higher than that of the softened workpiece, it is possible to remarkably decrease abrasion (wear) of the peripheral cutting edge 6 and to extend a tool life.

That is, by setting the helix angle of the peripheral cutting edge 6 to 30° to 40°, the above-described effects of the present embodiment can be further remarkably exerted.

Specifically, since the helix angle of the peripheral cutting edge 6 is more than 30°, it is possible to secure sharpness in the peripheral cutting edge 6 sufficient to scrape off the workpiece softened by the cutting heat.

In addition, since the helix angle of the peripheral cutting edge 6 is less than 40°, it is possible to increase the cutting resistance of the peripheral cutting edge 6 enough to obtain the cutting heat sufficient to soften the workpiece.

Moreover, in the present embodiment, since the end mill body 2 is formed of Sialon, which is a ceramic material, the end mill body has improved heat resistance, thermal shock resistance, mechanical strength under a high-temperature environment, abrasion resistance, or the like. Accordingly, the above-described effects of the present embodiment can be further remarkably exerted and stably realized.

In addition, in the present embodiment, since dry-ice powder is used as the coolant which is supplied to the cutting part 3a of the radius end mill 1 and the machining surface (machining target portion) of the workpiece during cutting operation, it is possible to prevent adhesion of an oxide film even when the cutting heat increases as described above.

### [Other Configurations included in Present Invention]

For example, in the first embodiment, Sialon is used as the ceramic material of the end mill body 2. However, other ceramic materials may be used.

In addition, the helix angle of the peripheral cutting edge 6 is 30° to 40°, but the present invention is not limited to this. That is, in the present invention, since the negative angle is -20° to -10° in the radial rake angle of the peripheral cutting edge 6 and the above-described remarkable effects are obtained, for example, the helix angle of the peripheral cutting edge 6 may be smaller than 30° or may be larger than 40°.

However, if the helix angle of the peripheral cutting edge 6 is within the range from 30° to 40°, since the above-described effects can be further remarkably exerted, the helix angle within the range is preferable. In addition, if the helix angle of the peripheral cutting edge 6 is less than 39°, the above-described effects can be more stably obtained, and more preferably, the helix angle of the peripheral cutting edge 6 is 30° to 35°.

Moreover, in the range from 30° to 35°, since the cutting heat increases as the helix angle of the peripheral cutting edge 6 is close to 30°, favorable results are easily obtained.

### [Example]

Hereinafter, the present invention will be specifically described by Example. However, the present invention is not limited to Example.

### [Confirmation Test A of Cutting Length]

As Example of the present invention, the radius end mill 1 described in the first embodiment was prepared.

That is, in the radius end mill 1 used in a confirmation test A, the end mill body 2 was formed of ceramic, and the radial rake angle (outer peripheral rake angle) α of the peripheral cutting edge 6 was within a range from -20° to -10°.

Specifically, three kinds of radius end mills 1 were prepared, in which the radial rake angles α of the peripheral cutting edge 6 were -18°, -15°, and -12°, and the radius end mills 1 were defined as Examples 1 to 3 in order.

Moreover, although Comparative Examples were the same as Examples in that the end mill body 2 was formed of ceramic, two kinds of radius end mills were prepared, in which the radial rake angles α of the peripheral cutting edge 6 were -23° and -7°, which were outside the range of the present invention, and the radius end mills were defined as Comparative Examples 1 and 2 in order.

In addition, continuous cutting was performed on a workpiece using the radius end mills, and confirmation with respect to a cutting length (total cutting length) until the peripheral cutting edge 6 reached a cutting impossible state (tool life) due to edge defects, abrasion, or the like was performed.

In addition, cutting conditions or the like were as follows.
Number of edges of radius end mill and size: four and ϕ 10 mm × R 1.25 mm
Workpiece: INCONEL (registered trademark) 718
Rotating speed: 20000 min⁻¹
Cutting speed: 628 m/min
Feed rate: 2000 mm/min
Feed per one edge: 0.025 mm/tooth
Coolant: dry
Cutting method: down cut
Protrusion length: 23 mm
Depth of cut ae: 3.0 mm
Depth of cut ap: 7.5 mm

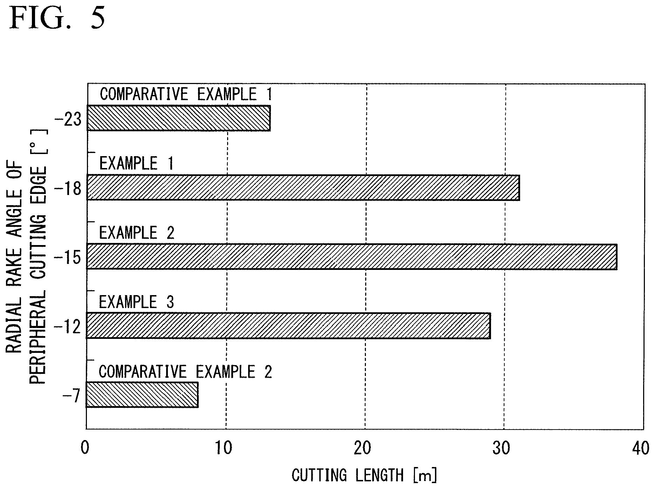

The results of the confirmation test A are shown in a graph of FIG. 5.

As shown in FIG. 5, in Examples 1 to 3 of the present invention, the cutting lengths could be sufficiently secured. Accordingly, it was confirmed that the cutting operation could be stably performed and the tool life could be extended.

Particularly, it was confirmed that in Example 2 in which the radial rake angle α of the peripheral cutting edge 6 was within the range from -17.5° to -12.5°, the cutting length reached more than 35 m and more remarkable effects were exerted.

Compared to Examples 1 to 3, in Comparative Examples 1 and 2, the cutting lengths were less than half.

Specifically, in Comparative Example 1, since the sharpness of the peripheral cutting edge 6 was too low, it is considered that this affected the cutting length. In addition, in Comparative Example 2, since the edge tip strength of the peripheral cutting edge 6 and the cutting heat during the cutting could not be sufficiently obtained, it is considered that these affected the cutting length.

### <Second Embodiment>

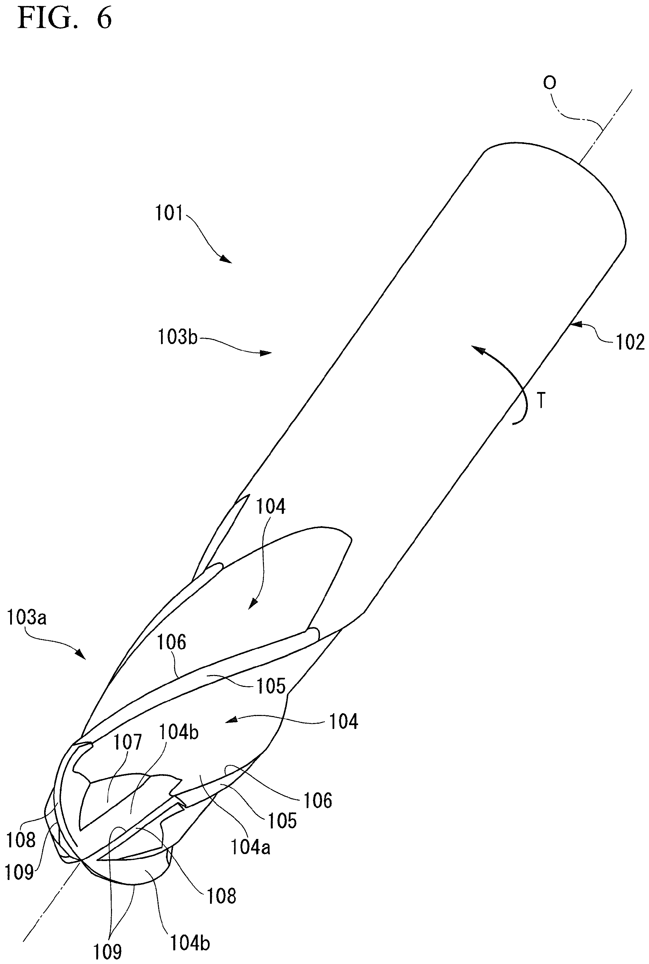

Next, a second embodiment of an end mill according to the present invention will be described with reference to FIGS. 6 to 9.

Moreover, in the second embodiment, for example, a ball end mill will be described as the end mill.

### [Schematic Configuration of Ball End Mill and End Mill Body]

As shown in FIGS. 6 to 8, a ball end mill 101 of the present embodiment includes an end mill body 102 which has a shaft shape and is formed of ceramic. Specifically, the end mill body 102 is formed of Sialon (SiAlON), which is a ceramic material.

The end mill body 102 is formed in an approximately columnar shape, and a cutting part 103 a is formed on at least a tip part in the direction of the axial line O of the end mill body 102. Apart of the end mill body 102 except for the cutting part 103a is a shank part 103b.

The shank part 103b which is formed in a columnar shape in the end mill body 102 is held by a main shaft or the like of a machine tool, and the ball end mill 101 is rotated in a tool rotation direction T around the axial line O and is used in cutting operation (tool rotating-cutting process) of a workpiece configured of a metal material or the like.

In addition, the ball end mill 101 is fed in a direction intersecting the axial line O while being rotated as described above, and for example, performs shoulder milling machining, groove machining, R milling machining, profile machining, or the like on the workpiece by the cutting part 103a.

In addition, particularly, the ball end mill 101 of the present embodiment is suitable for a cutting operation of heat-resistant alloy (hard-to-cut material) such as INCONEL (registered trademark) as the workpiece.

In addition, when cutting operation is performed on the workpiece by the ball end mill 101, a coolant is injected to the cutting part 103a of the ball end mill 101 and a cutting surface (a machining target portion) of the workpiece. Preferably, dry-ice powder is used as the coolant.

### [Definition of Orientation (Direction) Used in the Present Specification]

In the present specification, in the direction of the axial line O of the end mill body 102, a direction from the shank part 103b toward the cutting part 103a is referred to as a tip side, and a direction from the cutting part 103a toward the shank part 103b is referred to as a posterior end side.

In addition, a direction orthogonal to the axial line O is referred to as a radial direction, and in the radial direction, a direction approaching the axial line O is referred to as an inside in the radial direction, and a direction separated from the axial line O is referred to as an outside in the radial direction.

Moreover, a direction circulating around the axial line O is referred to as a circumferential direction, and in the circumferential direction, a direction in which the end mill body 102 rotates during the cutting operation is referred to as the tool rotation direction T, and a direction toward the side opposite to the tool rotation direction T is referred to as a direction opposite to the tool rotation direction T.

### [Chip Discharge Flute]

A plurality of chip discharge flutes 104 are formed on the outer periphery of the cutting part 103a at intervals in the circumferential direction. The chip discharge flutes 104 are open to the tip surface of the end mill body 102 and extend while being gradually twisted toward the side opposite to the tool rotation direction T from the tip surface toward the posterior end side. The chip discharge flutes 104 terminate at the outer periphery of the end mill body 102 on the end portion on the posterior end side of the cutting part 103a.

In the ball end mill 101 of the present embodiment, four chip discharge flutes 104 are formed at intervals (equal intervals or unequal intervals) in the circumferential direction.

Each chip discharge flute 104 has a wall surface facing the tool rotation direction T, and a portion of the wall surface adjacent to a cutting edge becomes a rake face. Specifically, among the rake faces of the cutting edge, a portion of the cutting edge adjacent to a peripheral cutting edge 106 described below and a portion thereof adjacent to an end cutting edge 109 are respectively referred to as a rake face 104a of the peripheral cutting edge 106 and a rake face 104b of the end cutting edge 109.

A gash 107 which is formed by cutting a tip part of the chip discharge flute 104 in a groove shape in the radial direction is formed on the tip part of the chip discharge flute 4. Specifically, the gash 107 of the present embodiment is formed in a V-shaped cross-sectional groove shape extending in the radial direction on the tip part of the chip discharge flute 104, and the end portion of the gash 107 on the inside in the radial direction is disposed to be close to the axial line O.

In the present embodiment, four gashes 107 corresponding to the four chip discharge flutes 104 are formed. The gashes 107 are radially formed about the axial line O.

### [Cutting Edge]

The cutting part 103a includes a plurality of cutting edges at intervals in the circumferential direction. Each cutting edge includes the peripheral cutting edge 106 and the end cutting edge 109, and the peripheral cutting edge 106 and the end cutting edge 109 are smoothly continuous to each other to form one J-shaped cutting edge.

The ball end mill 101 of the present embodiment includes the cutting part 103a having four edges (four cutting edges).

However, the number of the cutting edges (the number of sets of the peripheral cutting edges 106 and the end cutting edges 109 continuous in a J shape) of the ball end mill 101 is not limited to four described in the present embodiment, and for example, may be three or less or five or more. Moreover, the number of the cutting edges corresponds to the number of the chip discharge flutes 104.

### [Peripheral Cutting Edge]

The peripheral cutting edge 106 is formed on an intersection ridge line between the wall surface facing the tool rotation direction T in the chip discharge flute 104 and an outer peripheral surface of the end mill body 102. The peripheral cutting edge 106 extends in a pitch helix shape (spiral) along an outer peripheral end edge of the wall surface of the chip discharge flute 104.

Specifically, the peripheral cutting edge 106 is formed on an intersection ridge line between the rake face 104a positioned at the end portion on the outside in the radial direction of the wall surface facing the tool rotation direction T of the chip discharge flute 104 and an outer peripheral flank face 105 adjacent to the side opposite to the tool rotation direction T of the chip discharge flute 104 of the outer peripheral surface of the cutting part 103a.

The outer peripheral flank face 105 is formed on the outer peripheral surface of the cutting part 103a between the chip discharge flutes 104 adjacent in the circumferential direction. A width (a length in a direction orthogonal to the peripheral cutting edge 106) of the outer peripheral flank face 105 is approximately constant in the extension direction of the peripheral cutting edge 106.

Specifically, in the cutting part 103a, the peripheral cutting edges 106 having the number (four) corresponding to the number (four) of the chip discharge flutes 104 are formed at intervals to each other in the circumferential direction. The peripheral cutting edge 106 extends while being gradually twisted toward the side opposite to the tool rotation direction T from the tip of the end mill body 102 toward the posterior end side with the same lead as the chip discharge flute 104.

A diameter (a distance from the axial line O to the peripheral cutting edge 106 in the radial direction, that is, a radius) of the peripheral cutting edge 106 is constant in the direction of the axial line O. Accordingly, a rotation locus which is formed by rotating the peripheral cutting edge 106 around the axial line O is a single cylindrical surface with the axial line O as a center. In addition, a diameter of the outer peripheral flank face 105 adjacent to the peripheral cutting edge 106 is constant in the direction of the axial line O.

That is, the ball end mill 101 of the present embodiment is a ball end mill in a narrow sense defined by JIS B0172-1993 (No. 4208) in which a longitudinal section (cross section along the axial line O) of the cylindrical surface formed by the rotation locus of the peripheral cutting edge 106 is formed of straight lines parallel to the axial line O and, for example, which is used in cutting operation or the like of a straight groove (rib groove) having a perpendicular wall on the machining target portion.

In addition, a radial rake angle (angle α) of the peripheral cutting edge 106 is set to a negative angle in a cross-sectional view of the end mill body 102 (viewed from a cross section perpendicular to the axial line O of the end mill body 102) shown in FIG. 9.

Specifically, the radial rake angle of the peripheral cutting edge 106 is -20° to -10°. Preferably, the radial rake angle of the peripheral cutting edge 106 is -17.5° to -12.5°.

In the present specification, the "radial rake angle of the peripheral cutting edge 106" indicates, in a cross-sectional view of the end mill body 102 shown in FIG. 9, an acute angle α among acute angles and obtuse angles which are formed between a virtual surface (corresponding to a so-called "reference surface") formed in a predetermined radial direction D passing through a peripheral cutting edge 106 among radial directions orthogonal to the axial line O and the rake face 104a (a wall surface portion facing a tool rotation direction T of a chip discharge flute 104 adjacent to the peripheral cutting edge 106) of the peripheral cutting edge 106.

In addition, in a case where the radial rake angle is "minus", that is, is a negative angle, the negative angle is an angle α when the rake face 104a of the peripheral cutting edge 106 extends so as to be inclined toward the side opposite to the tool rotation direction T as directing to the outside in the radial direction in a cross-sectional view of the end mill body 102 shown in FIG. 9.

In this case, the rake face 104a of the peripheral cutting edge 106 is disposed on the tool rotation direction T side with respect to the virtual surface (reference surface) formed in the predetermined radial direction D.

In addition, although it is not particularly shown, in a case where the radial rake angle is "plus", that is, is a positive angle, the positive angle is the angle α when the rake face 104a of the peripheral cutting edge 106 extends so as to be inclined in the tool rotation direction T as directing to the outside in the radial direction in a cross-sectional view of the end mill body 102.

In this case, the rake face 104a of the peripheral cutting edge 106 is disposed on the side opposite to the tool rotation direction T with respect to the virtual surface (reference surface) formed in the predetermined radial direction D.

In the present embodiment, the radial rake angle of at least the peripheral cutting edge 106 among the peripheral cutting edge 106 and the end cutting edge 109 configuring the cutting edge is set to a negative angle, and the radial rake angle of the peripheral cutting edge 106 is set to the above-described numerical range.

Moreover, except for the peripheral cutting edge 106, the radial rake angle of the end cutting edge 109 may be set to a negative angle.

In addition, a helix angle (angle β) of the peripheral cutting edge 106 is 30° to 40° in a side view of the end mill body 102 shown in FIG. 7 (in a side view when the end mill body 102 is viewed in the radial direction orthogonal to the axial line O).

Preferably, the helix angle of the peripheral cutting edge 106 is less than 39°. More preferably, the helix angle of the peripheral cutting edge 106 is 30° to 35°.

In the present specification, the "helix angle" indicates the acute angle β among acute angles and obtuse angles formed between the axial line O (or a straight line parallel to the axial line O) and the peripheral cutting edge 106 (pitch helix of twist) in a side view of the end mill body 102 shown in FIG. 7.

### [End Cutting Edge (Tip Cutting Edge)]

As shown in FIGS. 6 to 8, the end cutting edge (tip cutting edge) 109 is formed on an intersection ridge line between the wall surface facing the tool rotation direction T in the chip discharge flute 104 and the tip surface of the end mill body 102.

The end cutting edge 109 has a convexly arc shape which is convex toward the tip outer-peripheral side of the end mill body 102, is smoothly continuous to the tip of the peripheral cutting edge 106, and extends from the tip toward the axial line O.

Specifically, the end cutting edge 109 is formed on an intersection ridge line between the rake face 104b positioned at the end portion on the tip side of the wall surface facing the tool rotation direction T of the chip discharge flute 104 (gash 107) and a tip flank face 108 adjacent to the side opposite to the tool rotation direction T of the chip discharge flute 104 of the tip surface of the cutting part 103a.

The tip flank face 108 is formed on the tip surface of the cutting part 103a between the chip discharge flutes 104 adjacent in the circumferential direction. A width (a length in a direction orthogonal to the end cutting edge 109) of the tip flank face 108 is approximately constant in the extension direction of the end cutting edge 109. In the shown example, the width of the tip flank face 108 is narrower than the width of the outer peripheral flank face 105.

The tip flank face 108 has a convexly curved-surface shape which is convex toward the tip outer-peripheral side of the end mill body 102. The posterior end portion of the tip flank face 108 is connected to the tip part of the outer peripheral flank face 105.

In the cutting part 103a, the end cutting edges 109 having the number (four) corresponding to the number (four) of the chip discharge flutes 104 are formed at intervals to each other in the circumferential direction.

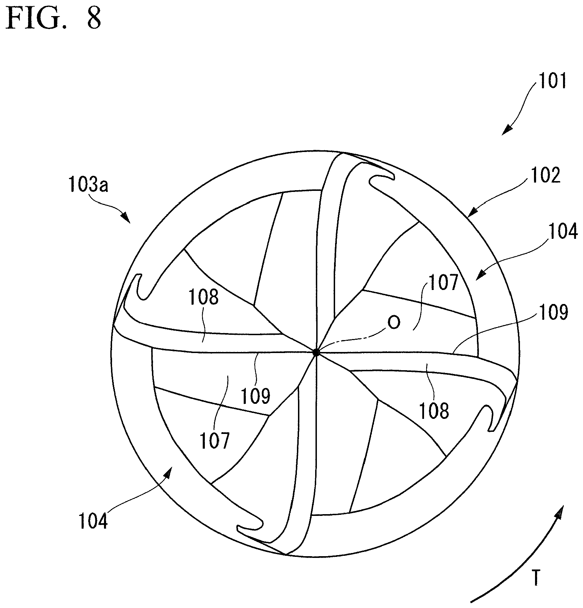

In the present embodiment, in a front view of the end mill body 102 shown in FIG. 8 (when the tip surface of the end mill body 102 is viewed from the front surface in the direction of the axial line O), the end cutting edge 109 extends in the radial direction, and the inner end (the end edge on the inside in the radial direction) of the end cutting edge 109 is positioned on the axial line O.

In addition, the adjacent end cutting edges 109 in a state where the axial line O is interposed therebetween are smoothly connected to each other on the axial line O. In the shown example, all the end cutting edges 109 are connected to each other on the axial line O.

Moreover, in a side view of the end mill body 102 shown in FIG. 7, a rotation locus which is formed by rotating the end cutting edge 109 around the axial line O becomes one semispherical surface which has the axial line O with a center.

As shown in FIG. 7, the rake angle of the end cutting edge 109 is set to a positive angle close to 0° or is set to 0°. That is, the rake face 104b of the end cutting edge 109 is formed to be gradually inclined toward the side opposite to the tool rotation direction T from the tip (end cutting edge 109) toward the posterior end side, and is formed to be gradually inclined toward the side opposite to the tool rotation direction T from the outer end (end cutting edge 109) in the radial direction toward the inside in the radial direction, or is formed to be parallel to the axial line O.

Moreover, the rake angle of the end cutting edge 109 may be set to a negative angle. In this case, the rake face 104b of the end cutting edge 109 is gradually inclined in the tool rotation direction T from the tip toward the posterior end side, and is gradually inclined in the tool rotation direction T from the outer end in the radial direction toward the inside in the radial direction.

### [Effects by the Present Embodiment]

According to the ball end mill 101 of the above-described present embodiment, the end mill body 102 is formed of ceramic. In addition, the radial rake angle (outer peripheral rake angle, angle α in FIG. 9) of at least the peripheral cutting edge 106 among the peripheral cutting edge 106 and the end cutting edge 109 is set to a negative angle. Specifically, the radial rake angle of the peripheral cutting edge 106 is -20° to -10°.

Accordingly, during cutting operation, a cutting resistance of the peripheral cutting edge 106 of the ball end mill 101 with respect to a workpiece increases, and therefore, cutting heat (heat generated due to plastic deformation in a shear region, friction heat, or the like) also increases.

If the cutting heat increases, compared to a peripheral cutting edge 106 of a ball end mill 101 which is formed of ceramic and has a high heat resistance, a cutting surface (a machining target portion) of the workpiece is softened. That is, hardness of the machining target portion significantly decreases with respect to the peripheral cutting edge 106.

Accordingly, the peripheral cutting edge 106 can perform cutting at a high speed so as to scrape off the workpiece. In addition, since the hardness of the ball end mill 101 is higher than that of the softened workpiece, it is possible to remarkably decrease abrasion (wear) of the peripheral cutting edge 106 and to extend a tool life.

That is, the inventors of the present invention have intensively researched about the ball end mill 101 formed of ceramic, and as a result, the inventors made the findings that, cutting heat is intentionally increased during the cutting operation by setting the radial rake angle of the peripheral cutting edge 106 to the above-described numerical range, the workpiece is softened while maintaining the hardness of the ball end mill 101, and it is possible to significantly increase a cutting speed by performing the cutting operation so as to scrape off the workpiece by a hardness difference therebetween.

Accordingly, a cutting mode (machining aspect) by the ball end mill 101 of the present embodiment is largely different from a cutting mode of a general ball end mill in the related art.

Specifically, according to the ball end mill 101 of the present embodiment, for example, in a case where cutting operation is performed on heat-resistant alloy such as INCONEL (registered trademark) as a workpiece, compared to a general ball end mill (a product in the related art) formed of cemented carbide, it was confirmed that 10 times or more machining efficiency could be realized.

Moreover, in the peripheral cutting edge 106 of the ball end mill 101 of the present embodiment, a tool angle is sufficiently secured and edge tip strength is improved by setting the radial rake angle to the above-described numerical range. Accordingly, chipping or the like of the edge does not easily occur. In addition, since the tool angle of the peripheral cutting edge 106 is large and the edge tip strength increases, it is possible to stably perform cutting operation (side surface machining) using the peripheral cutting edge 106 even though it is the ball end mill 101 (a ball end mill in a narrow sense).

Moreover, in a case where the radial rake angle of the peripheral cutting edge 106 is less than -20°, that is, in a case where the radial rake angle largely increases to a negative angle side, sharpness of the peripheral cutting edge 106 is excessively decreased, and it is difficult to increase the cutting speed even when the workpiece is softened by the cutting heat.

In addition, in a case where the radial rake angle of the peripheral cutting edge 106 exceeds -10°, the radial rake angle is excessively close to a positive angle side and desired cutting heat cannot be obtained. That is, since the cutting heat is not sufficiently increased, the workpiece is not softened, the above-described effects of the present embodiment cannot be obtained, and there is a concern that the peripheral cutting edge 106 is abraded at an early stage and reaches the tool life.

Accordingly, in the present embodiment, the radial rake angle of the peripheral cutting edge 106 is -20° to -10°.

As described above, according to the present embodiment, even when the end mill body 102 is formed of ceramic, it is possible to increase the cutting speed and improve machining efficiency while sufficiently securing the edge tip strength or the abrasion resistance of the peripheral cutting edge 106, and it is possible to extend the tool life.

Moreover, in the case where the radial rake angle of the peripheral cutting edge 106 is -17.5° to -12.5°, the above-described effects according to the present embodiment can be more reliably and stably obtained.

Moreover, in a case where the radial rake angle of the peripheral cutting edge 106 is -15°, the most remarkable effect is obtained.

In addition, in the present embodiment, since the helix angle (angle β in FIG. 7) of the peripheral cutting edge 106 is 30° to 40°, the following effects are exerted.

In general, for example, in a ball end mill (a product in the related art) formed of cemented carbide, the helix angle of the peripheral cutting edge is set to be larger than 40°. This is because the peripheral cutting edge sharply cuts into a workpiece and sharpness increases by setting the helix angle to a large positive angle.

In the above-described configuration of the present embodiment, the helix angle of the peripheral cutting edge 106 is set as small as 30° to 40° so as to intentionally increase the cutting resistance of the peripheral cutting edge 106 with respect to a workpiece. Accordingly, during cutting operation, the cutting resistance of the peripheral cutting edge 106 of the ball end mill 101 with respect to the workpiece increases, and cutting heat (heat generated due to plastic deformation in a shear region, friction heat, or the like) also increases.

If the cutting heat increases, the cutting surface (a machining target portion) of the workpiece is further softened compared to the peripheral cutting edge 106 of the ball end mill 101 which is formed of ceramic and which has a high heat resistance. That is, hardness of the machining target portion is significantly decreased compared to the peripheral cutting edge 106.

Accordingly, the peripheral cutting edge 106 can perform cutting at a high speed so as to scrape off the workpiece. In addition, since the hardness of the ball end mill 101 is higher than that of the softened workpiece, it is possible to remarkably decrease abrasion (wear) of the peripheral cutting edge 106 and to extend a tool life.

That is, by setting the helix angle of the peripheral cutting edge 106 to 30° to 40°, the above-described effects of the present embodiment can be further remarkably exerted.

Specifically, since the helix angle of the peripheral cutting edge 106 is more than 30°, it is possible to secure sharpness in the peripheral cutting edge 106 sufficient to scrape off the workpiece softened by the cutting heat.

In addition, since the helix angle of the peripheral cutting edge 106 is less than 40°, it is possible to increase the cutting resistance of the peripheral cutting edge 106 enough to obtain the cutting heat sufficient to soften the workpiece.

Moreover, in the present embodiment, since the end mill body 102 is formed of Sialon, which is a ceramic material, the end mill body has improved heat resistance, thermal shock resistance, mechanical strength under a high-temperature environment, abrasion resistance, or the like. Accordingly, the above-described effects of the present embodiment can be further remarkably exerted and stably realized.

In addition, in the present embodiment, since dry-ice powder is used as the coolant which is supplied to the cutting part 103a of the ball end mill 101 and the machining surface (machining target portion) of the workpiece during cutting operation, it is possible to prevent adhesion of an oxide film even when the cutting heat increases as described above.

### <Third Embodiment>

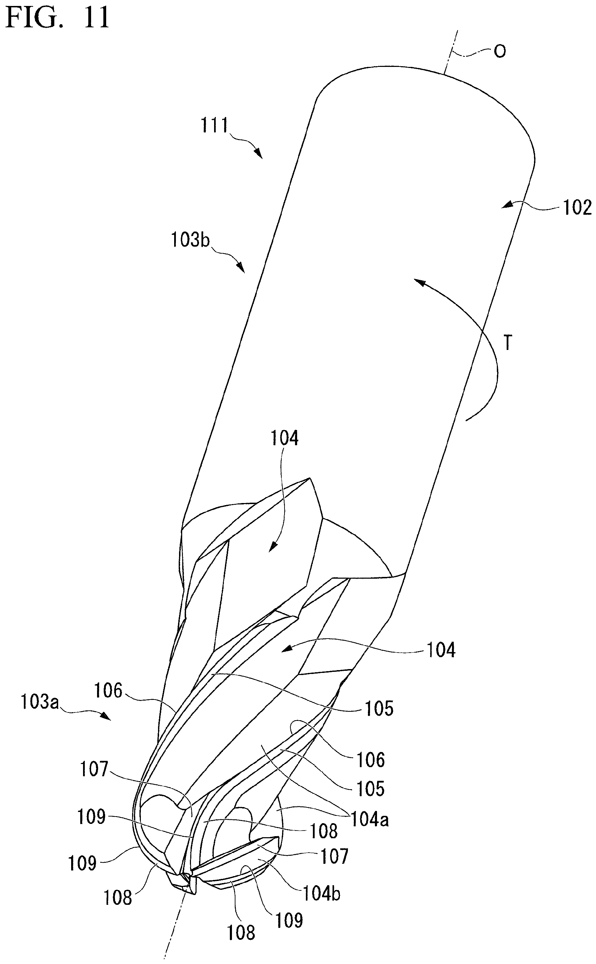

Next, a third embodiment of an end mill according to the present invention will be described with reference to FIG. 11 to 14.

In addition, in the third embodiment, as an end mill, a taper ball end mill which is one of ball end mills will be described as an example. In the third embodiment, detailed descriptions with respect to the same components as those of the second embodiment are omitted, and different matters will be mainly described below.

### [Difference between Second Embodiment and Third Embodiment]

As shown in FIGS. 11 to 13, in a ball end mill 111 of the present embodiment, the gash 107 is formed in a trapezoidal cross-sectional groove shape extending in the radial direction on the tip part of the chip discharge flute 104, and the end portion of the gash 107 on the inside in the radial direction reaches the axial line O.

In the present embodiment, four gashes 107 corresponding to the four chip discharge flutes 104 are formed. The gashes 10 7 communicate with each other on the end portion (the center of the tip surface of the end mill body 102 in the radial direction, that is, the axial line O) on the inside in the radial direction.

In the ball end mill 111 of the present embodiment, the diameter of the peripheral cutting edge 106 gradually increases from the tip toward the posterior end side in the direction of the axial line O. Accordingly, a rotation locus which is formed by rotating the peripheral cutting edge 106 around the axial line O becomes one taper surface which has the axial line O with a center. Moreover, the diameter of the outer peripheral flank face 105 adjacent to the peripheral cutting edge 106 gradually increases from the tip toward the posterior end side in the direction of the axial line O.

That is, the ball end mill 111 of the present embodiment is a taper ball end mill defined by JIS B0172-1993 (No. 4209) in which a longitudinal section of the taper surface formed by the rotation locus of the peripheral cutting edge 106 is formed of straight lines inclined with respect to the axial line O, and, for example, which is used in cutting operation or the like of a taper groove (taper rib groove) having an inclined wall on the machining target portion.

A radial rake angle (angle α) of the peripheral cutting edge 106 is set to a negative angle in a cross-sectional view of the end mill body 102 (viewed from a cross section perpendicular to the axial line O of the end mill body 102) shown in FIG. 14.

Specifically, the radial rake angle of the peripheral cutting edge 106 is -20° to -10°. Preferably, the radial rake angle of the peripheral cutting edge 106 is -17.5° to -12.5°.

Moreover, the radial rake angle of at least the peripheral cutting edge 106 among the peripheral cutting edge 106 and the end cutting edge 109 configuring the cutting edge is set to a negative angle, and the radial rake angle of the peripheral cutting edge 106 is set to the above-described numerical range.

Moreover, except for the peripheral cutting edge 106, the radial rake angle of the end cutting edge 109 may be set to a negative angle.

In addition, a helix angle (angle β) of the peripheral cutting edge 106 is 30° to 40° in a side view of the end mill body 102 shown in FIG. 12 (in a side view when the end mill body 102 is viewed in the radial direction orthogonal to the axial line O). Preferably, the helix angle of the peripheral cutting edge 106 is less than 39°. More preferably, the helix angle of the peripheral cutting edge 106 is 30° to 35°.

In addition, as in the present embodiment, in the taper ball end mill in which the outer diameter of the end mill body 102 increases from the tip in the direction of the axial line O toward the posterior end side, it is necessary to match lead lengths of the peripheral cutting edge 106 or to match helix angles β thereof. In the ball end mill 111 of the present embodiment, the helix angles β of the peripheral cutting edge 106 are matched to each other so as to be an equal twist.

The tip flank face 108 is formed on the tip surface of the cutting part 103a between the chip discharge flutes 104 adjacent in the circumferential direction. A width (a length in a direction orthogonal to the end cutting edge 109) of the tip flank face 108 is approximately constant in the extension direction of the end cutting edge 109. In the shown example, the width of the tip flank face 108 is the same as the width of the outer peripheral flank face 105.

The tip flank face 108 has a convexly curved-surface shape which is convex toward the tip outer-peripheral side of the end mill body 102. The posterior end portion of the tip flank face 108 is smoothly connected to the tip part of the outer peripheral flank face 105 without a step.

In the cutting part 103a, the end cutting edges 109 having the number (four) corresponding to the number (four) of the chip discharge flutes 104 are formed at intervals to each other in the circumferential direction.

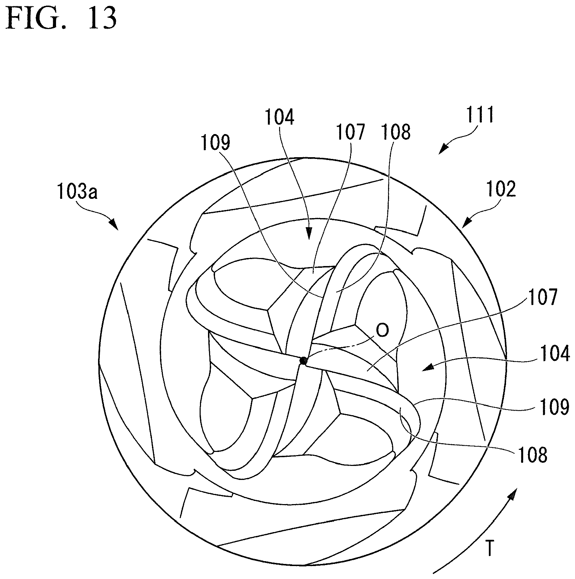

In the present embodiment, in a front view of the end mill body 102 shown in FIG. 13 (when the tip surface of the end mill body 102 is viewed from the front surface in the direction of the axial line O), the end cutting edge 109 extends in the radial direction, and the inner end (the end edge on the inside in the radial direction) of the end cutting edge 109 is positioned further outside in the radial direction than the axial line O.

### [Effects by the Present Embodiment]

According to the ball end mill 111 of the above-described present embodiment, it is possible to obtain effects similar to those of the above-described second embodiment.

Moreover, since the ball end mill 111 of the present embodiment is a taper ball end mill and is easily applied to the cutting operation using the peripheral cutting edge 106, effects on improvement in cutting efficiency obtained by the above-described peripheral cutting edge 106 easily become more remarkable effects.

### [Other Configurations included in Present Invention]

For example, in the second and third embodiments, Sialon is used as the ceramic material of the end mill body 102. However, other ceramic materials may be used.

In addition, the helix angle of the peripheral cutting edge 106 is 30° to 40°, but the present invention is not limited to this. That is, in the present invention, since the negative angle is -20° to -10° in the radial rake angle of the peripheral cutting edge 106 and the above-described remarkable effects are obtained, for example, the helix angle of the peripheral cutting edge 106 may be smaller than 30° or may be larger than 40°.

However, if the helix angle of the peripheral cutting edge 106 is within the range from 30° to 40°, since the above-described effects can be further remarkably exerted, the helix angle within the range is preferable. In addition, if the helix angle of the peripheral cutting edge 106 is less than 39°, the above-described effects can be more stably obtained, and more preferably, the helix angle of the peripheral cutting edge 106 is 30° to 35°. Moreover, in the range from 30° to 35°, since the cutting heat increases as the helix angle of the peripheral cutting edge 106 is close to 30°, favorable results are easily obtained.

Moreover, the second embodiment is described using the ball end mill 101 which is a ball end mill in a narrow sense and the third embodiment is described using the ball end mill 111 which is a taper ball end mill. However, the present invention may be applied to other ball end mills, for example, a long neck end mill, a taper neck end mill, or the like.

That is, the present invention can be applied to a ball end mill in a wide sense having various aspects, and the above-described remarkable effects can be exerted.

### [Example]

Hereinafter, the present invention will be specifically described using Example. However, the present invention is not limited to Example.

### [Confirmation Test B of Cutting Length]

As Example of the present invention, the ball end mill 101 described in the second embodiment was prepared. That is, in the ball end mill 101 used in a confirmation test B, the end mill body 102 was formed of ceramic, the diameter of the peripheral cutting edge 106 was constant in the direction of the axial line O, and the radial rake angle (outer peripheral rake angle) α of the peripheral cutting edge 106 was within a range from -20° to -10°.

Specifically, three kinds of ball end mills 101 were prepared, in which the radial rake angles α of the peripheral cutting edge 106 were -18°, -15°, and -12°, and the ball end mills 101 were defined as Examples 4 to 6 in order. Moreover, although Comparative Examples were the same as Examples in that the end mill body 102 was formed of ceramic and the diameter of the peripheral cutting edge 106 was constant in the direction of the axial line O, two kinds of ball end mills were prepared, in which the radial rake angles α of the peripheral cutting edge 106 were -23° and -7°, which were outside the range of the present invention, and the ball end mills were defined as Comparatives 3 and 4 in order.

In addition, continuous cutting was performed on a workpiece using the ball end mills, and confirmation with respect to a cutting length (total cutting length) until the peripheral cutting edge 106 reached a cutting impossible state (tool life) due to edge defects, abrasion, or the like was performed.

That is, cutting operation of continuously cutting the workpiece was performed using the entire region of the edge length (approximately the entire cutting part 103a including the end cutting edge 109 and the peripheral cutting edge 106) of the ball end mill.

In addition, cutting conditions or the like were as follows.
Number of edges of ball end mill and size: four and tip R5.0 mm, edge length 1D, and helix angle 30°
Workpiece: INCONEL (registered trademark) 718
Rotating speed: 24000 min⁻¹
Cutting speed: 754 m/min
Feed rate: 2880 mm/min
Feed per one edge: 0.03 mm/tooth
Coolant: dry
Cutting method: down cut
Protrusion length: 20 mm
Depth of cut ae: 1.5 mm
Depth of cut ap: 9.0 mm

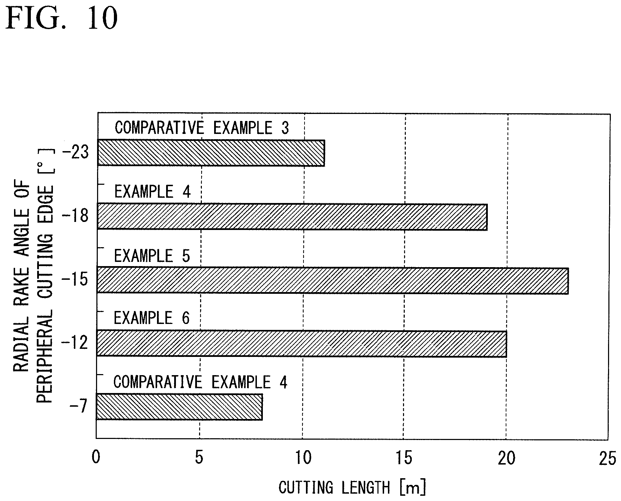

The results of the confirmation test B are shown in a graph of FIG. 10.

As shown in FIG. 10, in Examples 4 to 6 of the present invention, the cutting lengths could be sufficiently secured. Accordingly, it was confirmed that the cutting operation could be stably performed and the tool life could be extended.

Particularly, it was confirmed that in Example 5 in which the radial rake angle α of the peripheral cutting edge 106 was within the range from -17.5° to -12.5°, the cutting length exceeded 20 m and more remarkable effects were exerted.

Compared to Examples 4 to 6, in Comparative Examples 3 and 4, the cutting lengths were significantly decreased.

Specifically, in Comparative Example 3, since the sharpness of the peripheral cutting edge 106 was too low, it is considered that this affected the cutting length. In addition, in Comparative Example 4, since the edge tip strength of the peripheral cutting edge 106 and the cutting heat during the cutting could not be sufficiently obtained, it is considered that these affected the cutting length.

### [Confirmation Test C of Cutting Length]

Next, as Example of the present invention, the ball end mill (taper ball end mill) 111 described in the third embodiment was prepared.

That is, in the ball end mill 111 used in a confirmation test C, the end mill body 102 was formed of ceramic, the diameter of the peripheral cutting edge 106 gradually increased from the tip toward the posterior end side in the direction of the axial line O, and the radial rake angle (outer peripheral rake angle) α of the peripheral cutting edge 106 was within a range from -20° to -10°.

Specifically, three kinds of ball end mills 111 were prepared, in which the radial rake angles α of the peripheral cutting edge 106 were -18°, -15°, and -12°, and the ball end mills 111 were defined as Examples 7 to 9 in order.

Moreover, although Comparative Examples were the same as Examples in that the end mill body 102 was formed of ceramic and the diameter of the peripheral cutting edge 106 gradually increased from the tip toward the posterior end side in the direction of the axial line O, two kinds of ball end mills (taper ball end mills) were prepared, in which the radial rake angles α of the peripheral cutting edge 106 were -23° and -7°, which were outside the range of the present invention, and the ball end mills were defined as Comparative Examples 5 and 6 in order.

In addition, continuous cutting was performed on a workpiece using the ball end mills, and confirmation with respect to a cutting length (total cutting length) until the peripheral cutting edge 106 reached a cutting impossible state (tool life) due to edge defects, abrasion, or the like was performed.

That is, cutting operation of continuously cutting the workpiece was performed using the entire region of the edge length (approximately the entire cutting part 103a including the end cutting edge 109 and the peripheral cutting edge 106) of the ball end mill.

In addition, cutting conditions or the like were as follows.
Number of edges of ball end mill (taper ball end mill) and size: four and tip R4.0 mm, edge length 15.0 mm, helix angle 30°, and taper angle 3°.
Workpiece: INCONEL (registered trademark) 718
Rotating speed: 24000 min⁻¹
Cutting speed: 603 m/min
Feed rate: 2880 mm/min
Feed per one edge: 0.03 mm/tooth
Coolant: dry
Cutting method: down cut
Protrusion length: 18 mm
Depth of cut ae: 1.0 mm
Depth of cut ap: 15.0 mm

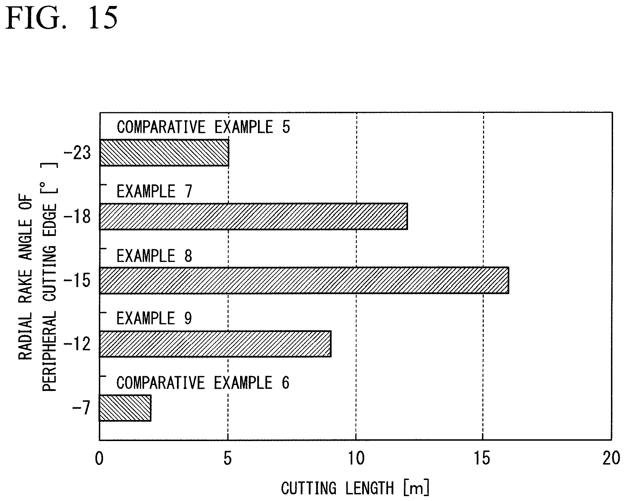

The results of the confirmation test C are shown in a graph of FIG. 15.

As shown in FIG. 15, in Examples 7 to 9 of the present invention, the cutting lengths could be sufficiently secured. Accordingly, it was confirmed that the cutting operation could be stably performed and the tool life could be extended.

Particularly, it was confirmed that in Example 8 in which the radial rake angle α of the peripheral cutting edge 106 was within the range from -17.5° to -12.5°, the cutting length exceeded 15 m and more remarkable effects were exerted.

Compared to Examples 7 to 9, in Comparative Examples 5 and 6, the cutting lengths were significantly decreased.

Specifically, in Comparative Example 5, since the sharpness of the peripheral cutting edge 106 was too low, it is considered that this affected the cutting length. In addition, in Comparative Example 6, since the edge tip strength of the peripheral cutting edge 106 and the cutting heat during the cutting could not be sufficiently obtained, it is considered that these affected the cutting length.

Moreover, the present invention is not limited to the above-described embodiments, and various modifications can be applied within a scope which does not depart from the gist of the present invention.

In addition, configurations (components) described in the above-described embodiment, modifications, annotation, or the like may be combined, and addition, omission, replacement, and other modifications can be applied within the scope which does not depart from the gist of the present invention. In addition, the present invention is not limited by the above-described embodiments and is limited by only claims.

### Industrial Applicability

According to the present invention, even when the end mill body is formed of ceramic, it is possible to increase the cutting speed and improve machining efficiency while sufficiently securing the edge tip strength or the abrasion resistance of the peripheral cutting edge, and it is possible to extend the tool life. Accordingly, the present invention has industrial applicability.

### Reference Signs List

O: axial line
T: tool rotation direction
α: angle (radial rake angle of peripheral cutting edge)
β: angle (helix angle of peripheral cutting edge)
1: radius end mill (end mill)
2: end mill body
4: chip discharge flute
6: peripheral cutting edge
9: end cutting edge (tip cutting edge)
10: corner cutting edge
101: ball end mill (end mill)
102: end mill body
104: chip discharge flute
106: peripheral cutting edge
109: end cutting edge (tip cutting edge)
111: ball end mill (taper ball end mill, end mill)

## Claims

1. A radius end mill, comprising:
a shaft-shaped end mill body which is formed of ceramic;
a chip discharge flute which is formed on an outer periphery of the end mill body and gradually extends toward a side opposite to a tool rotation direction in a circumferential direction around an axial line from a tip toward a posterior end side in an axial line direction of the end mill body;
a peripheral cutting edge which is formed on an intersection ridge line between a wall surface facing the tool rotation direction in the chip discharge flute and an outer peripheral surface of the end mill body;
an end cutting edge which is formed on an intersection ridge line between the wall surface in the chip discharge flute and a tip surface of the end mill body; and
a corner cutting edge which is positioned at a tip outer-peripheral part of the end mill body, connects an outer end of the end cutting edge and a tip of the peripheral cutting edge to each other, and has a convex curved shape which is convex toward a tip outer-peripheral side of the end mill body,
wherein a radial rake angle of at least the peripheral cutting edge among the peripheral cutting edge, the end cutting edge, and the corner cutting edge is set to a negative angle, and
wherein the radial rake angle of the peripheral cutting edge is -20° to -10°.

2. The radius end mill according to Claim 1,
wherein the radial rake angle of the peripheral cutting edge is -17.5° to -12.5°.

3. The radius end mill according to Claim 1 or 2,
wherein a helix angle of the peripheral cutting edge is 30° to 40°.

4. The radius end mill according to any one of Claims 1 to 3,
wherein the end mill body is formed of Sialon.

5. A ball end mill, comprising:
a shaft-shaped end mill body which is formed of ceramic;
a chip discharge flute which is formed on an outer periphery of the end mill body and gradually extends toward a side opposite to a tool rotation direction in a circumferential direction around an axial line from a tip toward a posterior end side in an axial line direction of the end mill body;
a peripheral cutting edge which is formed on an intersection ridge line between a wall surface facing the tool rotation direction in the chip discharge flute and an outer peripheral surface of the end mill body; and
an end cutting edge which is formed on an intersection ridge line between the wall surface in the chip discharge flute and a tip surface of the end mill body, has a convexly arc shape which is convex toward a tip outer-peripheral side of the end mill body, is smoothly continued to a tip of the peripheral cutting edge, and extends from the tip of the peripheral cutting edge toward the axial line,
wherein a radial rake angle of at least the peripheral cutting edge among the peripheral cutting edge and the end cutting edge is set to a negative angle, and
wherein the radial rake angle of the peripheral cutting edge is -20° to -10°.

6. The ball end mill according to Claim 5,
wherein the radial rake angle of the peripheral cutting edge is -17.5° to -12.5°.

7. The ball end mill according to Claim 5 or 6,
wherein a helix angle of the peripheral cutting edge is 30° to 40°.

8. The ball end mill according to any one of Claims 5 to 7,
wherein the end mill body is formed of Sialon.

9. An end mill, comprising:
a shaft-shaped end mill body which is formed of ceramic;
a chip discharge flute which is formed on an outer periphery of the end mill body and gradually extends toward a side opposite to a tool rotation direction in a circumferential direction around an axial line from a tip toward a posterior end side in an axial line direction of the end mill body;
a peripheral cutting edge which is formed on an intersection ridge line between a wall surface facing the tool rotation direction in the chip discharge flute and an outer peripheral surface of the end mill body; and
an end cutting edge which is formed on an intersection ridge line between the wall surface in the chip discharge flute and a tip surface of the end mill body,
wherein the end cutting edge is formed such that an outer end of the end cutting edge is positioned at a tip outer-peripheral part of the end mill body and is connected to a tip of the peripheral cutting edge via a corner cutting edge having a convex curved shape which is convex toward a tip outer-peripheral side of the end mill body, or is formed to have a convexly arc shape which is convex toward the tip outer-peripheral side of the end mill body, is smoothly continued to a tip of the peripheral cutting edge, and to extend from the tip of the peripheral cutting edge toward the axial line, and
wherein a radial rake angle of the peripheral cutting edge is set to a negative angle of -20° to -10°.
